(19) Europäisches Patentamt
European Patent Office
Office européen des brevets

(11) **EP 3 997 616 B1**

(12) **EUROPEAN PATENT SPECIFICATION**

(45) Date of publication and mention
of the grant of the patent:
**06.09.2023   Bulletin 2023/36**

(21) Application number: **20737213.7**

(22) Date of filing: **13.07.2020**

(51) International Patent Classification (IPC):
**G06V 20/13** *(2022.01)*      **G06V 10/82** *(2022.01)*
**G06F 18/2413** *(2023.01)*

(52) Cooperative Patent Classification (CPC):
**G06V 20/13; G06F 18/2413; G06V 10/82**

(86) International application number:
**PCT/EP2020/069797**

(87) International publication number:
**WO 2021/009141 (21.01.2021 Gazette 2021/03)**

(54) **OBJECT-BASED CHANGE DETECTION USING A NEURAL NETWORK**

OBJEKTBASIERTE ÄNDERUNGSDETEKTION UNTER VERWENDUNG EINES NEURONALEN NETZES

DÉTECTION DE CHANGEMENT DANS UN OBJET À L'AIDE D'UN RÉSEAU NEURONAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **12.07.2019   NL 2023497**

(43) Date of publication of application:
**18.05.2022   Bulletin 2022/20**

(73) Proprietor: **Neo, Netherlands Geomatics & Earth Observation B.V.**
**3811 HN Amersfoort (NL)**

(72) Inventors:
• **VALK, Arie Cornelis**
**3811 HN AMERSFOORT (NL)**
• **BECK, Robert**
**3811 HN AMERSFOORT (NL)**

(74) Representative: **De Vries & Metman**
**Overschiestraat 180**
**1062 XK Amsterdam (NL)**

(56) References cited:
• **NEMOTO KEISUKE ET AL: "Building change detection via a combination of CNNs using only RGB aerial imageries", PROCEEDINGS OF SPIE; [PROCEEDINGS OF SPIE ISSN 0277-786X VOLUME 10524], SPIE, US, vol. 10431, 4 October 2017 (2017-10-04), pages 104310J-104310J, XP060096805, DOI: 10.1117/12.2277912 ISBN: 978-1-5106-1533-5**
• **LICHAO MOU ET AL: "Learning Spectral-Spatial-Temporal Features via a Recurrent Convolutional Neural Network for Change Detection in Multispectral Imagery", ARXIV.ORG, CORNELL UNIVERSITY LIBRARY, 201 OLIN LIBRARY CORNELL UNIVERSITY ITHACA, NY 14853, 7 March 2018 (2018-03-07), XP081135133, DOI: 10.1109/TGRS.2018.2863224**
• **AHRAM SONG ET AL: "Change Detection in Hyperspectral Images Using Recurrent 3D Fully Convolutional Networks", REMOTE SENSING, vol. 10, no. 11, 17 November 2018 (2018-11-17), page 1827, XP055675693, DOI: 10.3390/rs10111827 cited in the application**
• **GENG JIE ET AL: "Change detection of marine reclamation using multispectral images via patch-based recurrent neural network", 2017 IEEE INTERNATIONAL GEOSCIENCE AND REMOTE SENSING SYMPOSIUM (IGARSS), IEEE, 23 July 2017 (2017-07-23), pages 612-615, XP033274494, DOI: 10.1109/IGARSS.2017.8127028**

- **HAOBO LYU ET AL: "Learning a Transferable Change Rule from a Recurrent Neural Network for Land Cover Change Detection", REMOTE SENSING, vol. 8, no. 6, 16 June 2016 (2016-06-16), page 506, XP055675820, DOI: 10.3390/rs8060506**
- **LIU JIA ET AL: "A Deep Convolutional Coupling Network for Change Detection Based on Heterogeneous Optical and Radar Images", IEEE TRANSACTIONS ON NEURAL NETWORKS AND LEARNING SYSTEMS, IEEE, PISCATAWAY, NJ, USA, vol. 29, no. 3, 1 March 2018 (2018-03-01), pages 545-559, XP011678390, ISSN: 2162-237X, DOI: 10.1109/TNNLS.2016.2636227 [retrieved on 2018-02-22]**

**Description**

Field of the invention

The invention relates to determining a change in an object or class of objects in image data, preferably remote sensing data; and, in particular, though not exclusively, to methods and systems for determining a change in an object or class of objects in image data, preferably remote sensing data and a computer program product enabling a computer system to perform such methods.

Background of the invention

Remote sensing data, such as satellite data and aerial image data, may be used for a wide variety of purposes, such as creating and updating maps, monitoring land cover and land use, water management, et cetera. Any monitored entity, e.g. a building, field, or road, may be considered an 'object'. For many purposes, detecting changes in such objects, e.g. new buildings, cut down trees, or additional lanes on a road, is especially relevant, as they may indicate a need for action, such as updating a map, or checking building permits or logging concessions. Detecting, categorising, and registering changes is typically an at least partially manual process.

However, the number of satellites and drones providing remote sensing data keeps growing, and they are equipped with increasingly powerful sensors, acquiring images at very high resolutions. This results in an increasing amount of (high-resolution) remote sensing data, necessitating automated tools for image processing. Consequently, automated change detection, i.e. automated detection of changes in geographical objects based on changes in image data, is a rapidly evolving field. Detection of an object in an image by an automated system may be referred to as 'object signal', detection of a change between images may be referred to as a 'change signal'. An aim of such automated systems may be to provide a system that is at least comparable to a human regarding accuracy.

One of the difficulties in automated change detection is avoiding a high rate of false positives, which may lead to unneeded reactions. Change detection methods should be able to differentiate between image changes due to changes in objects of interest, and other image changes, for instance due to different circumstances, e.g. clouds, changes in illumination or shadows, vegetation changes, et cetera. Whether a change signal is a 'true' signal or a 'false' signal, may depend on the object of interest (e.g. changes in tree foliage may lead to a true change signal when studying trees) or changes in the interest of the object, but to a false change signal when studying the road under the trees. Similarly, weather applications may be interested in clouds, while clouds may be considered noise for applications interested in land use. Typically, there is a balance between specificity and sensitivity. For many applications, especially in the context of longer time series, specificity is more important than sensitivity (i.e. false positives are worse than false negatives).

An example of a change detection method for remote sensing data can be found in A. Song et al., 'Change detection in hyperspectral images using recurrent 3D fully convolutional networks, Remote Sensing, Vol. 10, No. 11 (2018) art. 1827. Song *et al.* describe the use of an end-to-end trained Recurrent three-dimensional (3D) Fully Convolutional Network (Re3FCN) for multitemporal data analysis. The input data are patches of hyperspectral remote sensing images, i.e. images that have pixels in rows and columns, where each pixel has an array of values for each of a large number of spectral bands (light sensed at different wavelengths). An input image may therefore be considered a 3D data set, with two spatial dimensions (rows and columns) and one spectral dimension.

The Re3FCN includes two main modules: a spectral-spatial module comprising 3D convolutional layers and a temporal module comprising a recurrent network with a single-layer Convolutional Long Short-Term Memory (ConvLSTM). The spectral-spatial module uses 3D convolutional layers to encode so-called spectral and spatial features, such as edges or textures. The spectral-spatial module does not have a 'memory', i.e. each input is analysed independently of the previous inputs. The temporal module uses the output of the spectral-spatial module as input and models the temporal dependency of the spectral and spatial features in multitemporal images, i.e. performs the change detection proper. The output of the temporal module may be binary (unchanged or changed), or subdivided in a limited number of classes (unchanged, or type of change), based on the spectral and spatial features determined by the 3D convolutional layers.

However, the method of Song *et al.* also has various drawbacks. For example, the method does not discriminate well between relevant and irrelevant changes, and may therefore yield a high number of false positive change detections. Additionally, the method is sensitive to misclassification of pixels, and is not suitable for comparing images from different image sources (e.g. sensors operating at different wavelengths). Although reference is made to multitemporal images, the examples and embodiments in the text are limited to comparisons of only two time instances. Change detection over longer time series, which may have different requirements regarding e.g. data interpretation or training, are not explicitly disclosed by Song *et al.*

Another relevant example is the paper of Nemoto Keisuke et al., "Building change detection via a combination of CNNs using only RGB aerial imageries", PROCEEDINGS OF SPIE, 2017.

There is therefore a need in the art for a method to reliably detect changes to (physical) objects in remote sensing data that removes, or at least reduces one or more of the preceding drawbacks associated with object-based and /or pixel-based change detection methods.

Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks. For example, and without limitation, illustrative types of hardware logic components that may be used include Field-Programmable Gate Arrays (FPGAs), Application-specific Integrated Circuits (ASICs), Application-Specific Standard Products (ASSPs), System-on-a-Chip systems (SOCs), Complex Programmable Logic Devices (CPLDs), etc.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the embodiments in this disclosure to provide a computer-implemented method for determining a changed object or class of objects in image data, preferably remote sensing data. In an embodiment, the method comprises

The first and second object probability maps may be generated by dedicated object detectors, potentially based on neural networks, that are specialised in detecting the object or class of objects a user may be interested in and returning, for each pixel, the probability that it belongs to that object or class of objects. These object probability maps are provided as input to a neural network configured to determine a change in said object or class of objects. The use of dedicated object detectors results in high quality input to the actual change detector specific to the object or class of objects, reduces sensitivity to noise and/or pixel misclassification, and reduces the rate of false positives.

In general, methods for change detection can be divided into two broad categories: pixel based and object based. Pixel-based change detection seeks to determine whether a pixel value has changed meaningfully, and optionally, to classify a changed pixel. An advantage of pixel-based methods is that pixels are relatively easy to process (compared to objects of, potentially, arbitrary shape and size), and may e.g. be processed by advanced neural networks. Object-based change detection seeks to identify one or more objects in an image, and then determines changes in these identified objects. Object-based methods tend to be less sensitive to noise than pixel-based methods, but are dependent on the quality of the object detection.

The method according to this embodiment may be considered a 'hybrid' change-detection method, combining advantages from both object-based and pixel-based change-detection methods. The object detectors provide the object-based element, reducing noise and providing a high specificity. The comparison of the object probability maps is essentially a pixel-based method, allowing to use the advantages of, preferably recurrent, convolutional deep neural networks.

Object detection in remote sensing data may be based on image segmentation. Image segmentation is, essentially, identifying groups of pixels that, in some sense, belong together. Typically, an image segmentation method determines a discrete label for each pixel in an image, such that pixels with the same label are grouped together. A label may be binary or multi-valued. Segmentation methods can be broadly divided into semantic segmentation methods, aiming to classify each pixel as belonging to one of several classes of objects or even individual objects, and non-semantic segmentation methods, aiming to create contiguous patches by either grouping pixels that are similar in some way, or by creating edges at pixel discontinuities; in other words, non-semantic segmentation is based only on pixel properties, while semantic segmentation is based on the objects the pixels represent.

A system that uses a general image segmentation method to create objects in an image is typically less accurate in detecting predetermined objects than a dedicated object detector providing object probability maps, as it is less tailored to that end and may be more easily confused, misclassifying a pixel when e.g. two classes receive similar scores. As in many cases, a user is primarily interested in detecting a change in one or a few predetermined (classes of) objects, a high specificity in a limited range of objects may be preferred. Additionally, an automated non-semantic segmentation-based system may be less suitable to detect heterogeneous objects; for example, a segmentation algorithm detecting objects by creating relatively homogeneous pixel groups might have trouble identifying a parking lot, where the parked cars may have a high contrast with the ground, as a single object.

An additional advantage of a method using dedicated object detectors is that such a method allows for comparison of dissimilar remote sensing data (e.g. from different sensor types), provided the object of interest can be detected in both data sets. This may require using different object detectors for each input type. For example, a typical change detection algorithm cannot reliably detect changes between images from sensors operating in different wave bands (e.g. infra-red versus visible light), because the pixel values are typically very different, but with the method according to the invention, a comparison is possible because both images are first converted to probabilities using dedicated tools, and the resulting object probability maps can be reliably and meaningfully compared.

A neural network may be trained to distinguish between meaningful and meaningless changes to an object, resulting in a reliable interpretation of a comparison between two object probability maps. In some cases, such an interpretation may depend on more information than only the object probability maps; e.g. a tree carrying leaves in one image data set and not in another may be a meaningful change depending on the state of other trees in the images, or on the time of the year and geographic location, if such information is provided or derivable from the image. Change detection networks may be trained specifically for each object in which a change is to be detected, in order to maximize performance. Output may be binary, e.g. limited to just 'changed' or 'unchanged' or a probability of a change, but may also comprise information on the type of change, e.g. an object appeared, disappeared, or remained but was otherwise changed.

In an embodiment, the neural network is a recurrent neural network and the method further comprises: receiving one or more additional image data sets of the geographical region, each additional image data set being associated with an additional time instance; for each of the one or more additional image data sets, determining an additional object probability map on the basis of the additional image data set, a pixel in the additional object probability map having a pixel value, the pixel value representing a probability that the pixel is associated with the object or class of objects; and providing the one or more additional object probability maps to an input of the neural network, wherein the first object probability map, the second object probability map, and the one or more additional object probability maps are provided in an order based on a time ordering of the time instances associated with the first, second, and one or more additional image data sets.

In many use cases, it is preferable to monitor a geographical region over a longer period of time, repeatedly detecting changes to objects or classes of objects. It may also be necessary to provide multiple images to detect a change in an object, for instance because the quality of the images was insufficient to determine a change, or because part of the image may have been obscured in one or more of the image data sets. Usually, such a plurality of input image data sets should be provided to the neural network in chronological order or reverse chronological order. In a typical embodiment, each time a new image data set is acquired, this image data set may be provided to an object detector, and the resulting object probability map may be provided to the recurrent neural network; this procedure automatically takes care of the time-ordering. By (preferably automatically) providing all acquired images to the network, there is no need for human oversight, e.g. to handpick cloudless images, as the method is capable of distinguishing between true and false change signals.

An advantage of using a recurrent neural network is that it is capable of receiving and processing an undetermined number of images, whereas non-recurrent neural networks usually require a pre-determined amount of images; typically two, but larger numbers are also possible. Additionally, recurrent neural networks may provide an additional output probability map for each additional input image data set, whereas non-recurrent networks typically provide a single output probability map for each collection of input image data sets.

In an embodiment, the method further comprises: receiving an output probability map for each time instance after the first time instance in the time ordered set; and determining changes in the object or class of objects in the geographical region, based on each of the received output probability maps.

Instead of only receiving an output probability map after a number of input images have been analysed, it may be advantageous to create an output probability map for each time step (possibly except the first) and analyse this output to determine whether a change has occurred. In other embodiments, detecting a change may only occur at a selection of time instances, possibly in dependence of characteristics of the input images.

In an embodiment, the neural network is a deep recurrent neural network comprising at least two layers and at least one of the layers comprises a convolutional long short-term memory, ConvLSTM, cell, and the method further comprises the step of initialising the neural network. This network architecture was found to give particular accurate results.

In an embodiment, the method further comprises: pre-processing the image data sets and/or the object probability maps, the pre-processing comprising one or more of: rotating, scaling, resampling, cropping, and padding.

In a typical embodiment, the neural network requires object probability maps with a fixed number of pixels in the horizontal and vertical dimensions. Consequently, it may be necessary to crop and/or pad the image in order to obtain the required number of pixels. Depending on the architecture, this step may occur before and/or after the object detection step. Additionally, the input object probability maps should typically cover the same area in the same orientation and at the same resolution, which may necessitate rotating, scaling, and/or resampling of one or more of the input images or of the object probability maps. In some embodiments, pre-processing may also scale and/or crop the pixel values of the image data sets and/or the object probability maps.

In an embodiment, the method further comprises: receiving non-image data associated with the object or class of objects; converting the non-image data to pixel data; and concatenating the one or more of the object probability maps with the pixel data; and wherein providing an object probability map to an input of a neural network comprises providing an object probability map concatenated with the pixel data to the input of the neural network.

In an embodiment, the method further comprises: receiving non-image data associated with the object or class of objects; converting the non-image data to pixel data; and concatenating the one or more output probability maps with the pixel data; and wherein determining changes in the object or class of objects in the geographical region comprises determining changes in the object or class of objects in the geographical region based on a convolution of the output probability map and the pixel data.

Using additional data, i.e. data not comprised in the image data sets or resulting object probability maps, may increase the accuracy of the neural network or of the interpretation of the output probability map(s). Examples of such data are cadastre data such as building outlines and/or building types (typically stored as vector data), and governmental (e.g. municipal) data such as zoning plans or permits (e.g. building permits or logging permits).

In an embodiment, determining an object probability map on the basis of an image data set comprises: determining an auxiliary probability map on the basis of the first image data set, a pixel in the auxiliary probability map having a pixel value, the pixel value representing a probability that the pixel is associated with an auxiliary object or an auxiliary class of objects; and determining the first object probability map on the basis of at least the auxiliary probability map.

Using a plurality of object detectors in series may increase the accuracy and reduce the need for training and the memory footprint. For example, an object detector detecting dormers may benefit from output of an object detector detecting buildings. In this example, the dormer detector only needs to be trained with buildings, and does not need to take into account non-building parts of the image, which reduces training time and memory footprint. Similarly, a cloud detector may indicate which parts of an image may have a lower reliability because of the presence of clouds; this may help the interpretation of a changed pixel value. An additional advantage of using modularised object detectors is that it provides an interpretation of the results, whereas a single end-to-end neural network typically functions as a black box, giving little insight why e.g. the network detected an object or failed to detect an object.

In a further aspect, the invention may relate to a computer system adapted for determining a change in an object or class of objects in image data, preferably remote sensing data.

In an embodiment, the neural network may be a recurrent neural network, preferably a deep recurrent neural network. In an embodiment, the deep recurrent neural network may comprise at least two layers and at least one of the layers comprising a convolutional long short-term memory, ConvLSTM, cell.

In an embodiment, the executable operations may further comprise: receiving one or more additional image data sets of the geographical region, each additional image data set being associated with an additional time instance; for each of the one or more additional image data sets, determining an additional object probability map on the basis of the additional image data set, a pixel in the additional object probability map having a pixel value, the pixel value representing a probability that the pixel is associated with the object or class of objects; and, providing the one or more additional object probability maps to an input of the neural network, wherein the first object probability map, the second object probability map, and the one or more additional object probability maps are provided in an order based on a time ordering of the time instances associated with the first, second, and one or more additional image data sets.

In an embodiment, the executable operations may further comprise: receiving an output probability map for each time instance after the first time instance in the time ordered set; and, determining changes in the object or class of objects in the geographical region, based on each of the received output probability maps.

In an embodiemt, the executable operations may further comprise: receiving non-image data associated with the object or class of objects; converting the non-image data to pixel data; and, concatenating the one or more of the object probability maps with the pixel data; and wherein providing an object probability map to an input of a neural network comprises providing an object probability map concatenated with the pixel data to the input of the neural network.

In an embodiment, the executable operations may further comprise: receiving non-image data associated with the object or class of objects; converting the non-image data to pixel data; and, concatenating the one or more output probability maps with the pixel data; and wherein determining changes in the object or class of objects in the geographical region comprises determining changes in the object or class of objects in the geographical region based on a convolution of the output probability map and the pixel data.

In an embodiment, determining an object probability map on the basis of an image data set comprises: determining an auxiliary probability map on the basis of the first image data set, a pixel in the auxiliary probability map having a pixel value, the pixel value representing a probability that the pixel is associated with an auxiliary object or an auxiliary class of objects; and, determining the first object probability map on the basis of at least the auxiliary probability map.

In a further aspect, the invention may also relate to a computer program product comprising software code portions configured for, when run in the memory of a computer, executing the method steps according to any of the process steps described above.

Brief description of the drawings

Fig. 1 depicts a system for reliable object-based change detection in remote sensing data according to an embodiment of the invention;

**Fig. 2** depicts a flow diagram for change detection using a (recurrent) neural network according to an embodiment of the invention;

**Fig. 3** depicts data flow diagram for change detection over a plurality of time steps using a recurrent neural network according to an embodiment of the invention;

**Fig. 4A** and **4B** depict a schematic view of a convolutional long short-term memory (ConvLSTM) cell as may be used in an embodiment of the invention;

**Fig. 5A** depicts a schematic example of modular object detection as may be used in an embodiment of the invention, while **Fig. 5B** depicts a flow diagram of modular object detection as may be used in an embodiment of the invention;

**Fig. 6** depicts a schematic example of object-based change detection in a time series of images according to an embodiment of the invention,

**Fig. 7** depicts a flow diagram for training a neural network for reliable object-based change detection in remote sensing data according to an embodiment of the invention; and

**Fig. 8A** and **8B** depict flow diagrams for reliable object-based change detection in remote sensing data using additional object-related information according to an embodiment of the invention.

**Fig. 9** is a block diagram illustrating an exemplary data processing system that may be used for executing methods and software products described in this application.

Detailed description

In this disclosure embodiments are described of methods and systems to determine a change in an object or class of objects based on image data, preferably remote sensing data. The methods and systems will be described hereunder in more detail. An objective of the embodiments described in this disclosure is to determine changes in predetermined objects or classes of objects in a geographical region.

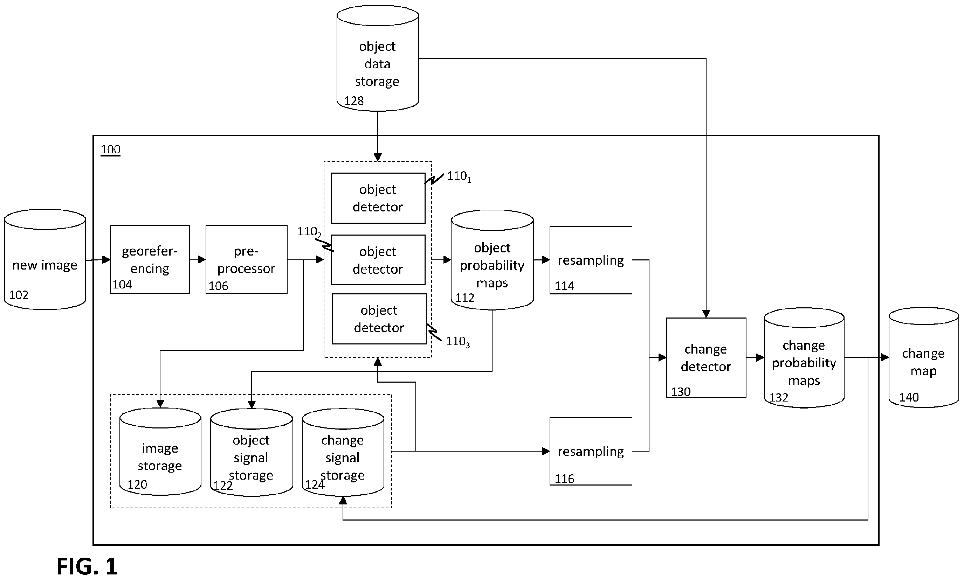

**Fig. 1** schematically depicts a system for reliable object-based change detection in remote sensing data according to an embodiment of the invention. When a new image **102,** typically an aerial image or satellite image, is received by the image processing and storage system **100,** the image may be georeferenced **104,** i.e. the internal coordinates of the image may be related to a ground system of geographic coordinates. Georeferencing may be performed based on image metadata, information obtained from external providers such as Web Feature Service, and/or matching to images with known geographic coordinates. The image may additionally be pre-processed by a pre-processor **106,** e.g. the pixel values may be normalised to a predefined range, or the image may be sliced, cropped, and/or padded to a predefined size. The (optionally georeferenced and pre-processed) image may then be stored in an image storage **120.** Alternatively or additionally, the raw image may be stored in an image storage.

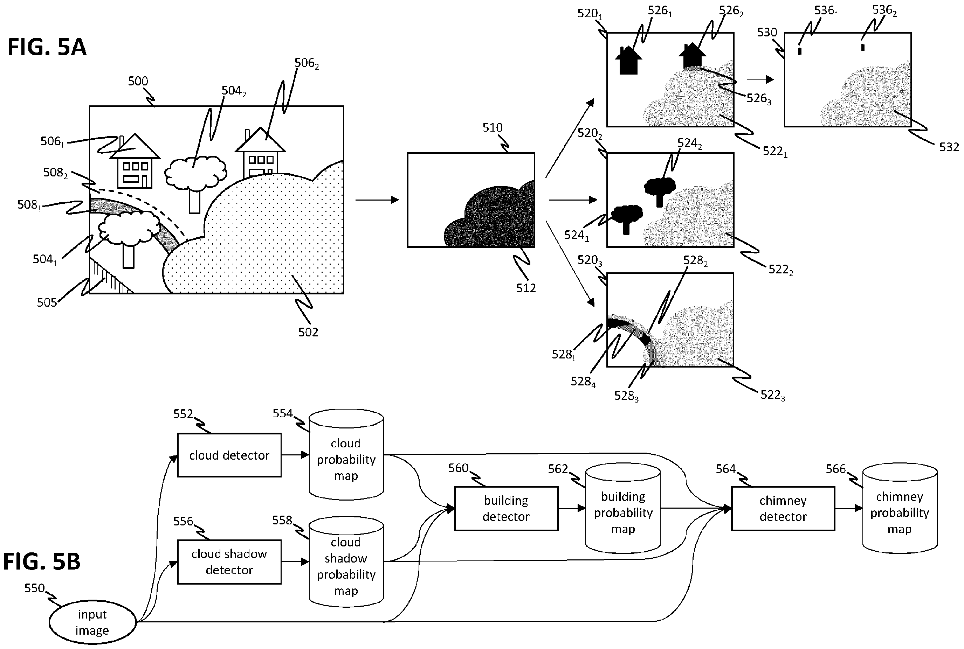

The image is subsequently provided to one or more object detectors **110$_{1-3}$**. The object detectors may operate on the image in series and/or in parallel. The object detectors may be implemented as neural networks, preferably convolutional neural networks, as analytic feature detectors, or in any other way or combination of methods. The object detectors may receive additional input from an object data storage **128,** for example data from a municipal building database, (publicly) available GIS data, et cetera. The object detectors may receive additional input from stored images or stored object signals, i.e. detected objects or detection probability information related to objects. The object detectors are described in more detail with reference to **Fig. 5A,B.** The object detectors may output one or more object probability maps **112,** which may be stored in an object signal storage **122.** Additionally or alternatively, a thresholded or otherwise processed image comprising detected objects may be stored. Preferably, each object probability map encodes the probability that a pixel or group of pixels belongs to a single object or class of objects. For example, a first object probability map may encode the probability of a pixel showing a solar panel and a second object probability map encoding the probability of a pixel showing a roof dormer. A pixel may be associated with one or more objects, e.g. 'building', and 'flat roof top' and 'solar panel (roof mounted)'.

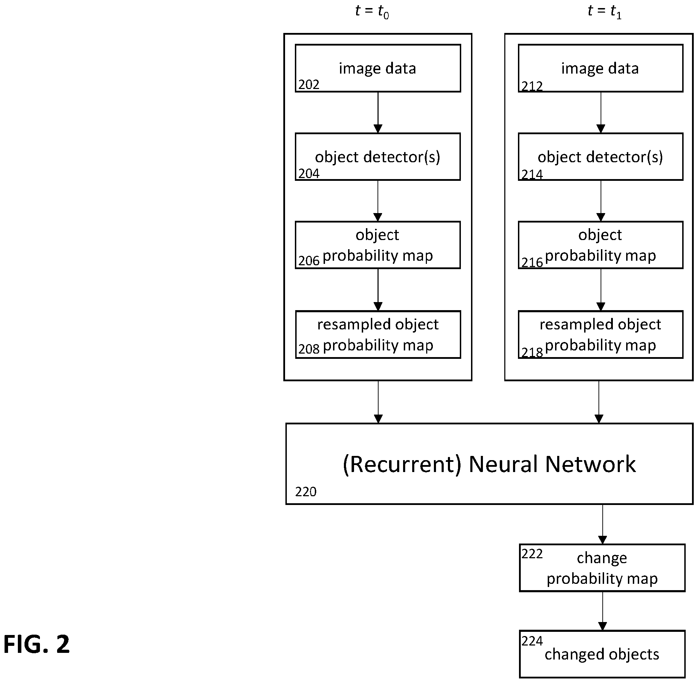

If there are earlier images of the same geographical region in the image storage and/or object signal storage, the change detector **130** may be triggered. Depending on the resolution and size of the object probability map, and the amount of geographical overlap with an earlier, stored object probability map or change signal, the object probability map may be resampled, cropped, and/or padded or otherwise processed by a resampler **114;** the earlier, stored object probability map or change probability map may be treated similarly by a resampler **116.** The object probability map and one or more stored object signals and/or change signals are provided to the change detector **130.** The change detector may also receive additional information from an external data storage **128,** for instance municipal data regarding concessions, (changes to) zoning plans, or news reports. The change detector may be a conventional CNN or, preferably, a Recurrent CNN, and is described in more detail with reference to **Figs. 2-4.** The change detector outputs a change probability map **132,** which may be stored in change signal storage **124.** Based on this change probability map, a change map **140** may be determined, e.g. by thresholding. Optionally, the change map may comprise additional information from the input image data or external sources. For example, the change map may be overlayed on the input image to visually show the changed objects, and/or the change map may be combined with a map of expected changes based on e.g.

requested concessions. In some embodiments, a binary change map (i.e. representing changed / unchanged) may be combined with e.g. input data or object probability maps to determine a (possibly multi-class) type of change.

**Fig. 2** depicts a flow diagram for reliable object-based change detection in remote sensing data using a neural network according to an embodiment of the invention. In an embodiment, the neural network may be a recurrent neural network, preferably a deep recurrent neural network (deep RNN), At a first time instance $t = t_0$, a first image data set **202** of a geographical region is obtained and provided to the change detection system. As was described before with reference to **Fig. 1,** the first image data set may be georeferenced and pre-processed as needed. Subsequently, the first image data set is provided to an object detector **204** or ensemble of object detectors, that determine at least a first object probability map **206.** The first object probability map may comprise pixels, a pixel having a pixel value representing the probability that the pixel is associated with the object or class of objects the object detector is intended to detect. The object probability map may optionally be resampled, leading to a resampled object probability map **208,** which should be in a format that can be provided to the neural network **220,** which is preferably a recurrent neural network.

At a second time instance $t = t_1$, different from the first time instance, a second image data set **212** of the same geographical region is obtained and provided to the change detection system. The geographical region depicted in the second image data set may fully or partially overlap the geographical region depicted in the first image data set. The second image data set may be similar to the first image data set, e.g. a satellite image acquired with the same satellite as the first image data set, so that both image data sets have the same resolution and the same colour channels. Alternatively, the image data sets may be (very) different, e.g. one image data set may be acquired with a satellite using red and infrared colour channels, while the other image data set is acquired with a drone using only visible light, resulting in possibly different resolutions, colour channels, and pixel encodings (including data format, e.g. floats or unsigned shorts, and data ordering, e.g. numbering rows from the top or the bottom). The geographical regions of the first and second image data sets should at least partially overlap. For example, the second image data set may cover the same geographical region as the first image data set, or only a part thereof, and vice versa.

The second image data set may be georeferenced and pre-processed as needed. Subsequently, the second image data set is provided to an object detector **214** or ensemble of object detectors. The object detector **214** may be the same as the object detector **204,** or a different object detector. When the first image data set and the second image data set have the same or a similar data source, it may be preferable to use the same object detector, whereas when the first and second image data sets have different data sources, it may be preferable to use different object detectors, each specialised for detecting objects in a different data source. The object detector(s) **214** may determine at least a second object probability map **216.** The second object probability map may comprise pixels, a pixel having a pixel value representing the probability that the pixel is associated with the object or class of objects. The object probability map may optionally be resampled, leading to a resampled object probability map **218,** which should be in a format that can be provided to the neural network **220.** This may result in first and second resampled object probability maps **208,218** that have the same size in pixels, the same resolution, cover the same geographical area, and have the same pixel encoding. In some embodiments, there may be no resampling step. In other embodiments, resampling is only done as part of a pre-processing step prior to the object detection step.

The neural network **220** subsequently receives the, optionally resampled, object probability maps and determines as output, based on the pixel values in the first probability map and in the second probability map, a change probability map **222,** in which a pixel represents a probability of a change in the object or class of objects. Based on the change probability map **222,** changed objects **224** may be determined, e.g. objects that appeared, disappeared, grew, shrunk, or otherwise changed.

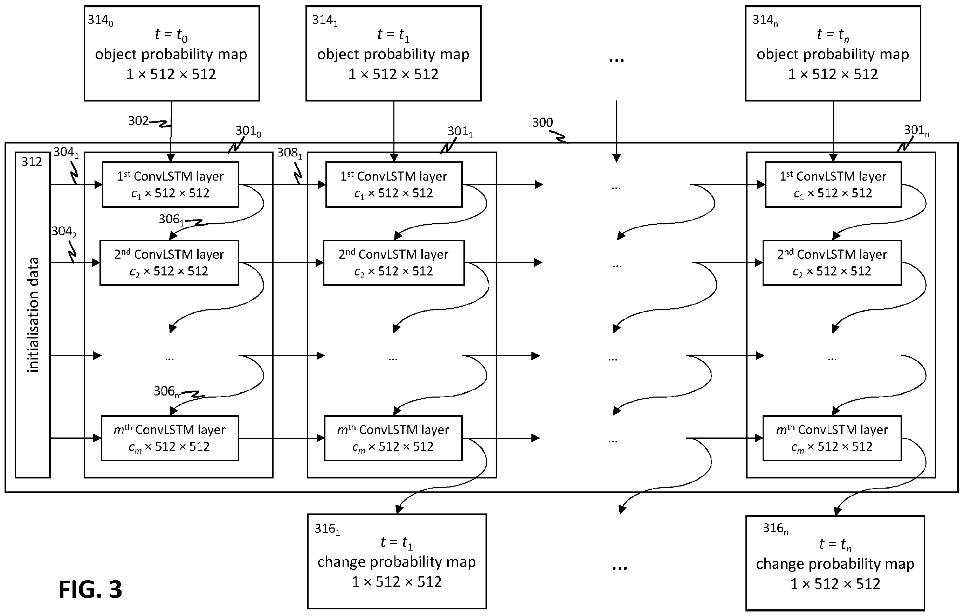

**Fig. 3** depicts a data flow diagram for change detection over a plurality of time steps using a recurrent neural network according to an embodiment of the invention. A deep recurrent neural network (RNN) **300** may have an input, an internal state, and an output. The blocks **301$_{0-n}$** refer to one block of convolutional layers, with the same trained parameters, but different (time step dependent) stored values in the memory cell. A number of input data sets may consecutively be provided to the input. The internal state and the output may depend on the input and previous internal states. The internal state may act as a sort of memory. Before a time instance $t = t_0$, the RNN may be initialised with initialisation data **312,** typically all zeroes, but other values are also possible. At a time instance $t = t_0$, a first object probability map **314$_0$** is provided to the input of the RNN (step **302**), each pixel in the first object probability map representing the probability that a pixel is associated with a predefined object or class of objects in a geographic region. As shown in the figure, in a first layer, the object probability map may be convoluted with a number $c_1$ of convolution masks, resulting in $c_1$ feature maps. These feature maps may be combined to one feature map, which is passed to the next layer (step **306$_1$**) and a block of layers associated with the next time instance (step **308$_1$**). In the embodiment depicted in **Fig. 3,** the input object probability map has $512 \times 512$ pixels, but other embodiments may use input maps of different sizes.

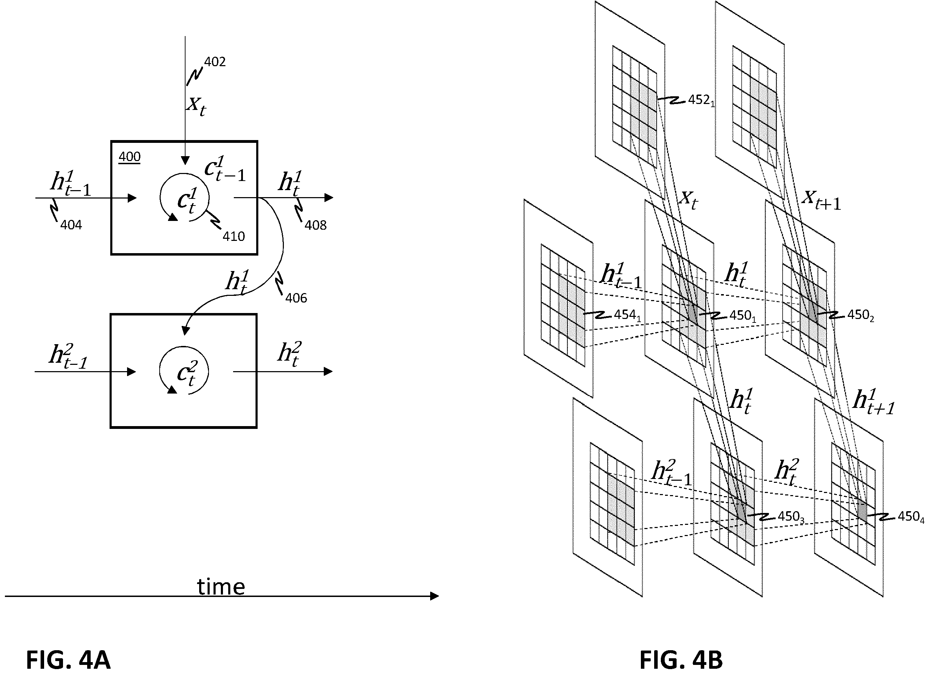

In the embodiment depicted in **Fig. 3,** depicts a so-called deep CRNN wherein the block includes a stack of Convolutional Long Short-Term Memory (ConvLSTM) cells, which are described in more detail with respect to **Fig. 4.** As shown in **Fig. 3,** each ConvSTM cell may be configured to receive the hidden state $h_t$ of a previous layer as input $x_t$ in the current layer as denoted by the arrow **306$_1$.** An example of a deep non-convolutional RNN using LSTM cells is given by Graves in the article 'Generating sequences with recurrent neural networks', arXiv:1308.0850v5 [cs.NE] (5 Jun. 2014). Apart from the use of non-convolutional LSTM cells, the example given by Graves differs from the example depicted in **Fig. 3** in that in Graves, there are additional direct connections from the input to each layer, and from each layer to the output. Other embodiments of the invention may also comprise one or more of such additional direct connections.

Some embodiments may use a RNN with a single layer, i.e. a so-called shallow CRNN. Other embodiments may have $m, m > 1$ layers. In such an embodiment, each layer $l$ may have its own set of $c_l$ feature maps, corresponding to $c_l$ convolutions with $c_l$ convolution masks. An advantage of such a so-called stacked deep RNN is that each layer may operate on different time scales. Another advantage is that lower layers may have a greater spatial awareness, as is explained with reference to **Fig. 4B.**

At a time instance $t = t_1$, a second object probability map **314$_1$,** associated with the same geographic region is provided to the RNN **300.** This input is processed by the same RNN, which compares the received input data with the data stored in the internal and/or hidden states, and determines new internal and hidden states. The RNN repeats this step for each layer, combining information from the previous time instance at the same depth and the immediately superior layer at the same time instance. The output of the last layer results in a change probability map **316$_1$.** In some embodiments there may be one or more additional layers between the last ConvLSTM layer and the output, e.g. a convolutional layer that reduces the $c_m$ layers to a single layer. This process may be repeated during n time instances. In an embodiment, the network could be trained to output at each time instance the cumulative detected changes in the inputted object probability maps with respect to the first object probability map of $t = t_0$. In a different embodiment, the network could be trained to output a detected change only at its first occurrence.

**Fig. 4A** depicts a schematic view of a convolutional long short-term memory (ConvLSTM) cell as may be used in an embodiment of the invention. A Long Short-Term Memory (LSTM) is a type of Recurrent Neural Network (RNN) that is particularly useful for analysing time series through a 'recurrent hidden state' that acts as a memory for earlier input. A typical application for RNNs is video analysis, where knowledge of previous video frames may help analysing a subsequent video frame, as sequential video frames are usually similar to each other. An example of an, optionally multi-layer, non-convolutional LSTM is given by A. Graves, 'Generating sequences with recurrent neural networks', arXiv:1308.0850v5 [cs.NE] (5 Jun. 2014). Graves does not refer to change detection. In a ConvLSTM, the matrix multiplications of the weights and inputs in a non-convolutional LSTM are replaced by convolutions, increasing the spatial awareness of the network. Such a ConvLSTM is described in e.g. Xingjian Shi et al., 'Convolutional LSTM network: a machine learning approach for precipitation nowcasting', Adv. Neural Inf. Process. Syst. 2015:1 (2015) pp. 802-810. Xingjian Shi *et al.* describe the application of a stacked multi-layer ConvLSTM to encode and predict, based on a consecutive time series of (RADAR echo) precipitation maps of an area, the precipitation maps (and hence precipitation) of the following time frames. They do not describe (object-based) change detection as such.

In an LSTM cell, the data flow is controlled by so-called gates. An LSTM cell comprises an input gate i, a forget gate $f$, and an output gate o, which control the data in a memory cell c, and a hidden state h. The forget gate determines to what extent the old memory value is retained, the input gate determines to what extent the input and the old hidden state are stored in the memory, and the output gate determines to what extent the memory value is output as a new hidden state. The gates typically have continuous values between 0 and 1.

A typical ConvLSTM cell may be described by the following equations:

$$i_t = \sigma(W_{xi} * x_t + W_{hi} * h_{t-1} + W_{ci}\, c_{t-1} + b_i)$$

$$f_t = \sigma(W_{xf} * x_t + W_{hf} * h_{t-1} + W_{cf}\, c_{t-1} + b_f)$$

$$c_t = f_t\, c_{t-1} + i_t\, \theta(W_{xc} * x_t + W_{hc} * h_{t-1} + b_c)$$

$$o_t = \sigma(W_{xo} * x_t + W_{ho} * h_{t-1} + W_{co}\, c_t + b_o)$$

$$h_t = o_t\, \theta(c_t)$$

where * is a convolution operator, juxtaposition denotes matrix multiplication, $\sigma$ is a sigmoid function, and $\theta$ is a tanh-like function; $i_t$ is an input gate, $f_t$ is a forget gate, $c_t$ is a memory cell, $o_t$ is an output gate, $h_t$ is a hidden state, and $x_t$ is the input data in the first layer, respectively the hidden state of the immediately higher layer in subsequent layers; $t$ is a time label, $b$. are bias vectors and $W_{ij}$ are weight matrices, where the indices have the obvious meaning; for example, $b_i$ is the bias of the input gate and $W_{hi}$ is the hidden state-input gate weight matrix. In this implementation, the third equation, defining $c_t$ is theoretically unbounded. However, in practice the plus sign between the first and second terms reduces the rate of change and limits vanishing and/or exploding gradient problems, whilst the forget gate also tends to prevent unlimited grow. Nevertheless, in some embodiments the value of $c_t$ may be limited between predefined boundaries. Before the first input is offered, $c_0$ and $h_0$ are initialised with initialisation data, which may consist of all zeroes.

A ConvLSTM cell **400** in a first layer of a RNN may combine inputs, in this case four inputs, at its input gate. These inputs may include input data $x_t$ **402,** the hidden state of the previous time step $h^1_{t-1}$ **404,** the value stored in the memory cell at the previous time step $c^1_{t-1}$ **410,** and a bias input (not shown). The input data and the hidden state are convolved with a weight matrix, while the memory cell is weighed with a (pointwise) matrix multiplication or Hadamard product. The forget gate uses the same inputs, but with independently optimised weights. The memory cell may be updated, wherein the forget gate determines to what extent the stored memory remains, and the input gate determines to what extent the input data and the hidden state of the previous time step are stored. The memory cell may e.g. retain information from previous probability maps that has not been replaced by new information. In the case of e.g. video analysis, the forget gate may erase the contents of the memory cell when a new scene is detected, and knowledge of previous frames that is not relevant for understanding a current frame.

The value of the output gate may depend on the input data $x_t$, the previous hidden state $h^1_{t-1}$, and the current (i.e. updated) value of the memory cell $c_t$ (in contrast to the input and forget gates, which use the value of the memory cell associated with the previous timestep). The output gate controls the value of the output hidden state $h^1_t$ **408.**

In some embodiments, the RNN may have more than one layer. In some of such embodiments, a ConvLSTM in a layer $m$, $m > 1$, may receive the hidden state $h^{m-1}$ of the preceding layer instead of the input data $x$. In other embodiments, a ConvLSTM in a layer $m$, $m > 1$, may receive both the input data $x$ and the hidden state $h^{m-1}$ of the preceding layer as inputs.

**Fig. 4B** schematically depicts a number of convolutional operations, in this case $3 \times 3$ convolutions. The aim of the convolutions is to encode spatial information from a previous time step in the current time step or from a higher layer in the current layer. The value of a (dark grey) pixel $450_{1-4}$ in a feature map depends the $3 \times 3$ pixel area surrounding the pixel in the same location in the previous time step, respectively in the input data or preceding layer, with potentially a different weight for each pixel. For example, the pixel value $450_1$ may depend on pixel values $452_1$ (in this case nine pixel values) in the input data $x_t$ and on pixel values $454_1$ (in this case nine pixel values) from the hidden state of the first network layer at the previous time instance $h^1_{t-1}$. Other embodiments may use different convolution schemes, e.g. $5 \times 5$, or dilated $3 \times 3$, or any other convolution scheme.

Performing a plurality of convolutions on subsequent layers may increase the spatial awareness of the deeper layers.

In some embodiments, multiple convolutions, each with different weights and possibly different sizes, may be performed, resulting in a plurality of feature maps. These may be combined to detect more complex objects. The input of the previous time step may also be convolved with one or more weight matrices, in a similar manner. This results in a combination of temporal and spatial information, and may hence detect e.g. moving or growing / shrinking objects.

**Fig. 5A** depicts a schematic example of determining an object probability map based on a remote sensing image of a geographical region. Image **500** depicts two houses $506_{1-2}$, two trees $504_{1-2}$, a fence **505,** and a single lane road **508,** that is under construction, being expanded with a second lane $508_2$. Part of the image **500** has been occluded by a cloud **502,** obscuring at least part of one house and part of the road. Another part of the road is covered by a tree. The input image **500** may be pre-processed, which may include e.g. rescaling, resampling, cropping, and/or padding; in the depicted embodiment, the input image is rescaled to half its original size for further processing.

In a first step, the input image **500** may be provided to a first object detector, in this example a cloud detector. The cloud detector may output a cloud probability map **510;** in this example a white colour represents a low probability that a pixel is associated with a cloud, and a dark grey or black colour represents a high probability that a pixel is associated with a cloud. In this example, the cloud detector has correctly assigned a high probability to the pixels **512** depicting the cloud. In a different embodiment the first object detector may be a different object detector or a group of detectors, e.g. a cloud shadow detector, a haze detector, and/or a snow detector. In some embodiments, the cloud probability map **510** may be used to determine the pixels that are associated with the cloud, e.g. to segment the cloud; this may e.g. be done by thresholding the cloud probability map, associating all pixels with a pixel value above the threshold value with a cloud label, and associating all pixels with a pixel value below the threshold value with a non-cloud label.

In a second step, the input image **500** and the cloud probability map **510** may both be provided to a plurality of second object detectors, in this example a building detector, a tree detector, and a road detector. The building detector may output a building probability map $520_1$, the tree detector may output a tree probability map $520_2$, and the road detector may output a road probability map $520_3$. In these probability maps $520_{1-3}$, dark colours again denote a high probability, and light colours a low probability. The building detector may detect the buildings $506_{1,2}$, and consequently assign a high probability to the corresponding pixel regions $526_{1,2}$. Similarly, the tree detector may assign a high probability to the pixel regions $524_{1,2}$ corresponding to the detected trees $504_{1,2}$, and the road detector may assign a high probability to the pixels $528_1$ corresponding to the single-lane road $508_1$.

As part of building $526_2$ is covered by the cloud, the building detector may assign a lower probability to the cloud-covered region $526_3$ than to the not cloud-covered part of the building. Nevertheless, based on the parts of the building that are visible, the building detector may be trained to infer the cloud-covered part. Consequently, the cloud-covered part of the building $526_3$ may be assigned a probability that is lower than that of the visible parts, but still relatively high. Similarly, the road detector may assign a lower, but still high probability to the part of the road covered by the cloud $528_3$, and also to the part of the road covered by one of the trees $528_4$.

In the part of the image that is covered by the cloud $522_{1-3}$, the building, tree, and road detectors may be trained to assign an intermediate probability, as the building, tree, and road detectors have insufficient information to determine whether or not, respectively, a building, tree, or road is present in the cloud-covered region apart from the parts belonging to a building or road segment that is partly visible. The road detector may also assign an intermediate probability to the new part of the road that is being constructed $528_2$; for example, it may exhibit certain properties of a road, such as shape, and it being immediately adjacent to another part of a road, but not other properties, such a surface material.

In a third step, the input image **500,** the cloud probability map **510,** and the building probability map $520_1$ may be provided to a third object detector, in this example a chimney detector. The chimney detector may output a chimney probability map **530**. Similarly to the previously discussed examples, the chimney detector may assign a high probability to the pixels corresponding to the detected chimneys $536_{1,2}$. An advantage of first detecting building and subsequently detecting chimneys, which may assumed to be placed on top of buildings, is an increased precision of the chimney detector. For example, first detecting the building may help to differentiate between the chimneys and the fence posts **505.**

In other embodiments, different object detectors may be used, and/or the object detectors may be ordered in a different way. For example, in some embodiments it may be advantageous to provide the input image **500** and the cloud probability map **510** first to the tree detector, and subsequently provide the input image **500,** the cloud probability map **510,** and the tree probability map $520_2$ to the road detector. This may help the road detector in deducing road parts that are covered by a tree, and increase the probability assigned to e.g. patch $528_4$.

In a typical embodiment, the object detectors may be based on deep neural networks, preferably convolutional deep neural networks. Other objects may be detected using more conventional image-analysis methods, such as analytical edge detection or feature extraction methods. Object detectors that are based on a neural network, may all be trained and optimised independently. This may greatly reduce the number of examples required for training. In the example of **Fig. 5A,** the chimney detector only needs to learn that chimneys are placed on top of buildings, and then be provided with images of buildings with and without chimneys. Training time and effort is greatly reduced, as the network does not need to learn to differentiate between chimneys and chimney-like objects that are not placed on buildings, such as the fence posts in **Fig. 5A.** An object detection system combining a plurality of object detectors that may be combined in parallel and/or in series is also known as a modular change detection system.

**Fig. 5B** depicts a flow diagram of modular object detection as may be used in an embodiment of the invention. In general, a modular object detection system may comprise a plurality of object detectors, each object detector configured to provide as output an object probability map, and configured to receive as input an input image and zero or more object probability maps. The modular object detection system may be run on one or more computers, typically on a server system. In this example, an input image **550** is provided to a first object detector, cloud detector **552.** The cloud detector provides as output a cloud probability map **554,** which may be stored in a memory of a computer. The input image **550** is also provided to a cloud shadow detector **556** which is, in this example, independent from the cloud detector **552.** The cloud shadow detector may be activated prior to the cloud detector, after the cloud detector, and/or concurrent with the cloud detector. The cloud shadow detector provides as output a cloud shadow probability map **558.**

Subsequently, the input image **550** is provided to an input of a building detector **560,** together with the cloud probability map **554** and the cloud shadow probability map **558.** The building detector provides as output a building probability map **562.** As was explained before, adding extra information as provided by the object probability maps may increase the sensitivity and/or specificity of an object detector, in this case the building detector. In other embodiments, the building detector might use more, less, or different object probability maps as input. In some embodiments, one or more of the object probability maps may be used as input for a plurality of object detectors, e.g. in the embodiment depicted in **Fig. 5A,** the cloud probability maps are used as input for a building detector, a tree detector, and a road detector.

Next, the input image **550** is provided to an input of a chimney detector **564,** together with the cloud probability map **554,** the cloud shadow probability map **558,** and the building probability map **562.** The chimney detector provides as output a chimney probability map **566.** In other embodiments, the chimney detector might use different inputs, e.g. only the input image and the building probability map, or the input image, the cloud probability map and the building probability map.

In other embodiments, other object detectors may be used, and they may be connected differently. Any of the object detectors may be implemented as a neural network, e.g. a deep convolutional neural network, and/or analytic or algebraic image analysis software. In a typical embodiment, each object probability map is stored in a database and may be reused for any number of other object detectors and/or change detectors.

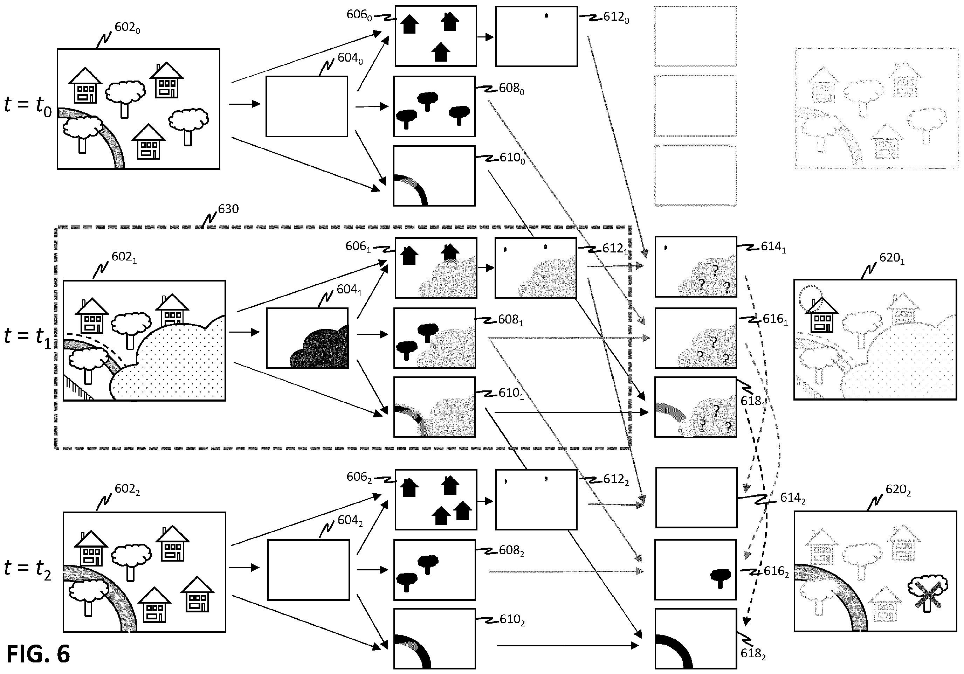

**Fig. 6** depicts a schematic example of object-based change detection in a time series of images. Images $602_{0-2}$ of a geographical region, are acquired at time instances $t_0$, $t_1$, and $t_2$, respectively. As the image at time instance $t = t_0$ is the earliest available image, image $602_0$ may be considered the reference image, depicting three houses, three trees, and a single lane road. In image $602_1$, part of the image has been occluded by a cloud, obscuring one house and one tree, and part of the road. One of the houses has now a chimney, and there are roadworks underway. The object detection steps **630** at time instance $t = t_1$ were discussed in more detail with reference to **Fig. 5A**; the object detection steps at time instances $t = t_0$ and $t = t_2$ are the same, in this embodiment, but may lead to different object probability maps, as discussed in more detail hereunder. In image $602_2$, the cloud is gone, the road works have finished resulting in a two-lane road, and one of the trees that was previously occluded by the cloud, has been felled and replaced by a house.

In this embodiment, the images are pre-processed, which comprises rescaling the image to half its original size; other embodiments may comprise, more, less, or different pre-processing steps. The rescaled images are then provided to a group of object detectors. The first object detector detects clouds, resulting in cloud presence information. This information may be used by subsequent object detectors to determine whether a pixel is likely to be associated with, respectively, a building, a tree, or a road. At time instance $t = t_0$, the cloud detector does not detect a cloud in input image $602_0$. The building detector detects three houses, the tree detector detects three trees, and the road detector detects one single-lane road segment. Part of this road segment is covered by a tree, but its presence is assumed based on the detector's knowledge of road segments. In this embodiment, the output of the building detector is provided to a chimney detector, which detects one chimney on a building. Having such prior information, training of the chimney detector can be greatly reduced, as the network does not need to learn to discriminate chimney-like objects that are not on top of buildings, such as e.g. fence poles.

At time instance $t = t_1$, the cloud detector detects a cloud. Subsequently, the building detector detects one complete building (black), and one partially obscured building (black); based on the detector's knowledge of buildings, it may guess at the remainder of the partly obscured building (dark grey). The building detector also detects a number of pixels that probably do not belong to a building (white). The building detector has insufficient information to determine whether or not the pixels where a cloud was detected, belong to a building and ascribes them an intermediate probability (shown in grey). The chimney detector detects two chimneys, on two buildings. The tree detector detects two trees, and the road detector detects a road segment, part of which it is unsure about (shown in grey). These steps have been discussed in more detail with reference to **Fig. 5A**. Subsequently, the chimney probability map $612_0$, based on the image data set $602_0$ acquired at $t = t_0$ and the chimney probability map $612_1$, based on the image data set $602_1$ acquired at $t = t_1$, are provided to the chimney change detection network, which detects one changed (appeared) chimney. Tree probability maps $608_0$ and $608_1$ are provided to the input of a tree change detection network, which does not detect a change. Road probability maps $610_0$ and $610_1$ are provided to the input of a road change detection network, which detects that the road may have changed, but is insufficiently sure. Finally, the detected changes may be highlighted in the input image, resulting in image $620_1$.

At time instance $t = t_2$, the cloud detector does not detect a cloud. The building detector detects four buildings, but still only two chimneys are detected by the chimney detector. Consequently, the chimney change detector does not detect any change, relative to the latest known chimneys. The tree detector again detects two trees. The tree change detection network does not have sufficient information to be sure this is a change with respect to the situation at time instance $t = t_1$, but the memory property of the recurrent network results in the tree change detection network deciding that there has at least been a change (disappearance) in trees with respect to time instance $t = t_0$. The road detector detects a road segment (still partially obscured by a tree), but now it is a two-lane road. While both the change from $t_0$ to $t_1$ and from $t_1$ to $t_2$ may not be clear enough to determine with certainty that there has been a change, the memory property of the network may help to determine that the overall change from $t_0$ to $t_2$ was large enough to detect a positive change. Finally, the detected changes may be highlighted in the input image, resulting in image $620_2$. Note that the appearance of a building has, in this example, not been detected, because no building change detection network was employed.

In some embodiments, more than one kind of object probability map may be provided to the change detection network; the change detection network may e.g. use both the cloud probability map and the tree probability map as inputs, to detect a change in trees. Such a configuration is especially advantageous when dealing with features that are preferably detected at multiple scale levels. For example, cloudiness and cloud opacity is best judged on a satellite image at large scales. Outlines of clouds and tracks of haze can be distinguished at a scale of hundreds of meters, while detection of individual trees may require a scale of two orders of magnitude lower. A model detecting disappeared trees without knowing where haze is present might incorrectly interpret a small flake of haziness as the absence of a tree, while a model that includes knowledge of haze will not report a disappeared tree here as it knows it lacks the required visibility at this location; provided the model is properly trained, allowing false negatives under cloudy conditions.

In an experiment performing change detection using a Convolutional Recurrent Neural Network with a time series of 5 images, inclusion of an additional input layer with the probability for cloud presence (in this experiment output from a separate Neural Network for cloud detection) improved the Jaccard index (a measure of similarity between label and model prediction) on a validation set for tree detection from 90.0% to 93.5%. For the specific case of cloud presence, the benefit may greatly depend on cloudiness of the images in question.

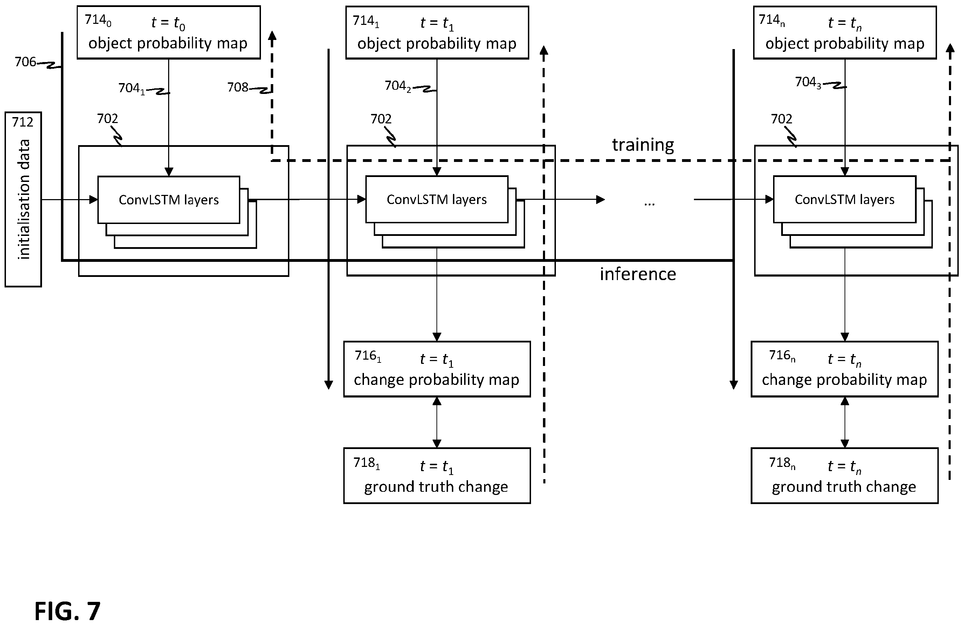

**Fig. 7** depicts a flow diagram for training a neural network for reliable object-based change detection in remote sensing data according to an embodiment of the invention. The diagram depicts a deep recurrent neural network (RNN) **702,** that is initialised with initialisation data **712.** It should be noted that while the RNN **702** is drawn three times in this diagram, it is thrice the same CRNN, with a single set of internal parameters, that receives a plurality different object probability maps $714_{0\text{-}n}$ at a plurality of time instances $t = t_0, t_1, ..., t_n$. The amount of time instances offered during training, may influence the maximum amount of time information that may be stored in the network's memory.

In order to train the change detection network, the network may comprise a training module. The system may be provided with training data and associated target data. The training data may include a plurality of probability maps $714_{0\text{-}n}$ of the object or class of objects in which a change is to be detected, while the target data may comprise at least one ground truth map $718_{1\text{-}n}$, preferably one ground truth map for each time instance except the first. A ground truth map may comprise information on actual (relevant) changes, as may be determined on the ground. The ground truth map is preferably a binary map, wherein each pixel may have a first value, e.g. 1, indicating that a change in the object or class of objects has occurred since the previous time instance, and a second value, e.g. 0, that no such change has occurred. Alternatively, the ground truth maps may indicate the cumulative changes with respect to the first or reference time instance $t = t_0$.

During training, the change detection network may predict **706** one or more change probability maps, i.e. the recurrent neural network may predict for each pixel of a training data set a probability of a change in the object or class of objects. During training, the target data may be provided to a different input of the neural network. The internal parameters of the change detection network may then be optimised by minimising a loss function related to the difference between the predicted change probability map and the ground truth map associated with that time instance. Such a function may be related to the sum over all pixels of the absolute value of the difference per pixel between the predicted change probability map and the ground truth map. In other embodiments, false positive and/or false negatives may additionally be penalised. Information about the error may be backpropagated **708** through the network, e.g. using a gradient descent method.

The accuracy of the trained network may depend on e.g. the training time, training sample variance, and amount of training examples. Additional training samples may be created from existing training samples by e.g. shifting and/or rotating data, or by applying noise to the data.

The change detection network may need to be trained separately for each type of object in which a change is to be detected. In an embodiment, the training data and target data may be enhanced by adjusting, e.g. rotating and/or shifting, the probability maps from one moment onwards in the time series. This way, a ground truth change map for the adjustments (rotations and/or shifts) for different time instances in the time series can be generated. These synthetic changes may enhance the training data and improve the training process of the neural networks.

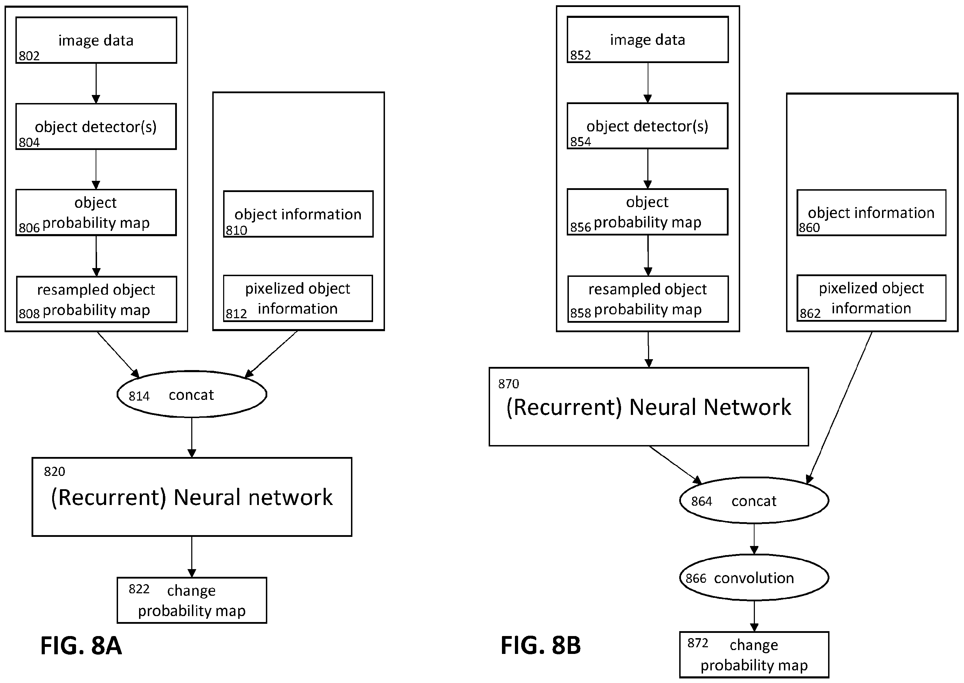

**Fig. 8A** and **8B** depict flow diagrams for reliable object-based change detection in remote sensing data using additional object-related information according to an embodiment of the invention. Additional object-related information may be any kind of data related to the object or class of objects other than the pixel values from remote sensing images. The additional object-related information may also be referred to as non-image data. A typical example of such additional object-related information is Geographic Information System (GIS) data, such as infrastructure databases that are used for maps. Such information may be used to increase the quality of object detection. Using such information for object detection has been described by e.g. Weija Li et al., 'Semantic segmentation-based building footprint extraction using very high-resolution satellite image and multi-source GIS-data', Remote sensing, Vol. 11, No. 4 (2019) art. 403. Weija Li *et al.* describe a method based on a U-Net (a type of deep convolutional neural network developed for binary segmentation) for segmentation of buildings in satellite data integrated with GIS map data. This method applies a binary segmentation to the satellite data, i.e. it identifies pixel regions according to whether or not they belong to a specific object type, i.c. buildings. Using GIS data increases the accuracy of the building detection. However, Weija Li *et al.* do not refer to change detection.

Changes to the environment, especially by private parties, often require a permit, such as planning permission or a building or logging permit. These permits and request for permits are often stored in databases. Other changes may be (publicly) notified, such as road construction works. Such information may be used to increase the quality of change detection: for example, the information that a building permit has been granted at a certain address may increase the probability of detecting a meaningful change. Using such information may require different steps; for example, if a permit only refers to an address, a cadastral database may be used to obtain an outline of the affected building or parcel, typically in vector format, which may need to be converted to pixel format before being provided to the change detection network.

In an embodiment, in a time step, an image data set **802** is provided to an object detector **804** or ensemble of object detectors, that determine an object probability map **806**. The object probability map may optionally be resampled, leading to a resampled object probability map **808.** Other object information **810,** typically non-image data associated with the object or class of objects or with changes in or to the object or class of objects may be obtained from e.g. a database or a different source. Examples of such data are cadastre data such as building outlines and/or building types (typically stored as vector data), and governmental (e.g. municipal) data such as zoning plans or permits (e.g. building permits or logging permits). In some embodiments, the object information may be converted to pixel data **812.** For example, a building permit may be linked to an address, and the address may be linked to an outline of a building or plot in cadastre data; in such an example, a pixel map may be created with preferably the same size and resolution as the resampled probability map, and the pixels within the outline defined by the cadastre data may be given a first value, associated with a requested building permit, and the pixels outside the outline may be given a second value.

In the embodiment depicted in **Fig. 8A,** the resampled object probability map and the pixelized object information are concatenated **814,** and provided as a single input to the neural network **820,** which is preferably a recurrent neural network. The neural network may then determine changes in the object or class of objects in the geographical region based on the joint resampled object probability map and the pixelized object information, by comparing these data to similar data obtained at a different time instance (not shown in this figure).

In the embodiment depicted in **Fig. 8B,** the same steps of acquiring an image data set **852,** providing the image data set to an object detector **854** or ensemble of object detectors, determining an object probability map **856,** and optionally resampling the object probability map are taken, leading to a resampled object probability map **858.** Similarly, object information **860** is converted to pixel data, resulting in pixelized object information **862.** In this embodiment, however, the pixelized object information is not provided to the neural network **870,** but is concatenated **864** with the output of the change detection neural network. This concatenated data set is provided to a convolution operation **866,** in order to obtain a change probability map. An advantage of determining changes in the object or class of objects in the geographical region based on a convolution of a concatenation of the output probability map and the pixelized object information is that it can be added to an existing change detection network without having to retrain the change detection network. Additionally, it may reduce the memory footprint of the change detection network, compared to the change detection network of **Fig. 8A,** and may require less training time. On the other hand, the change detection network from **Fig. 8A** may be expected to be more accurate, as the additional data can be remembered by the network as needed, and can be included in the optimisation.

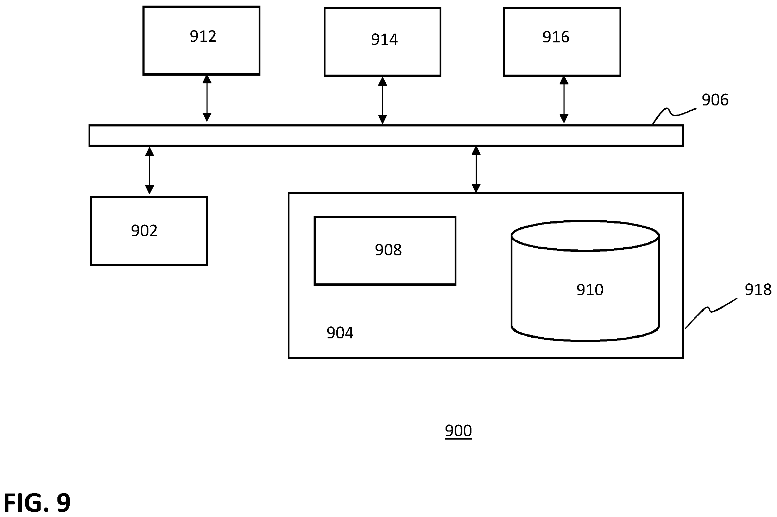

**Fig. 9** is a block diagram illustrating an exemplary data processing system that may be used in embodiments as described in this disclosure. Data processing system **900** may include at least one processor **902** coupled to memory elements **904** through a system bus **906.** As such, the data processing system may store program code within memory elements **904.** Furthermore, processor **902** may execute the program code accessed from memory elements **904** via system bus **906.** In one aspect, data processing system may be implemented as a computer that is suitable for storing and/or executing program code. It should be appreciated, however, that data processing system **900** may be implemented in the form of any system including a processor and memory that is capable of performing the functions described within this specification.

Memory elements **904** may include one or more physical memory devices such as, for example, local memory **908** and one or more bulk storage devices **910.** Local memory may refer to random access memory or other non-persistent memory device(s) generally used during actual execution of the program code. A bulk storage device may be implemented as a hard drive or other persistent data storage device. The processing system **900** may also include one or more cache memories (not shown) that provide temporary storage of at least some program code in order to reduce the number of times program code must be retrieved from bulk storage device **910** during execution.

Input/output (I/O) devices depicted as input device **912** and output device **914** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **916** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **900.**

As pictured in **Fig. 9,** memory elements **904** may store an application **918.** It should be appreciated that data processing system **900** may further execute an operating system (not shown) that can facilitate execution of the application. Application, being implemented in the form of executable program code, can be executed by data processing system **900,** e.g., by processor **902.** Responsive to executing application, data processing system may be configured to perform one or more operations to be described herein in further detail.

In one aspect, for example, data processing system **900** may represent a client data processing system. In that case, application **918** may represent a client application that, when executed, configures data processing system **900** to perform the various functions described herein with reference to a "client". Examples of a client can include, but are not limited to, a personal computer, a portable computer, a mobile phone, or the like. In another aspect, data processing system may represent a server. For example, data processing system may represent a server, a cloud server or a system of (cloud) servers.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration.

## Claims

1.   A computer-implemented method for determining a change in an object or class of objects in image data, preferably remote sensing data, comprising:

    receiving a first image data set of a geographical region associated with a first time instance and receiving a second image data set of the geographical region associated with a second time instance;
    determining an auxiliary probability map on the basis of the first image data set, a pixel in the auxiliary probability map having a pixel value, the pixel value representing a probability that the pixel is associated with an auxiliary object or an auxiliary class of objects, the object forming a part of the auxiliary object or the auxiliary object covering the object in the image data;
    determining a first object probability map on the basis of the first image data set and the auxiliary probability map and determining a second object probability map on the basis of the second image data set, a pixel in the first and second object probability maps having a pixel value, the pixel value representing a probability that the pixel is associated with the object or class of objects;
    providing the first object probability map and the second object probability map to an input of a neural network, preferably a recurrent neural network, the neural network being trained to determine a probability of a change in the object or class of objects, based on the pixel values in the first object probability map and in the second object probability map;
    receiving an output probability map from an output of the neural network, a pixel in the output probability map having a pixel value, the pixel value representing a probability of a change in the object or class of objects; and
    determining a change in the object or class of objects in the geographical region, based on the output probability map.

2.   Method according to claim 1, wherein the neural network is a recurrent neural network, the method further comprising:

    receiving one or more additional image data sets of the geographical region, each additional image data set being associated with an additional time instance;
    for each of the one or more additional image data sets, determining an additional object probability map on the basis of the additional image data set, a pixel in the additional object probability map having a pixel value, the pixel value representing a probability that the pixel is associated with the object or class of objects; and
    providing the one or more additional object probability maps to an input of the neural network, wherein the first object probability map, the second object probability map, and the one or more additional object probability maps are provided in an order based on a time ordering of the time instances associated with the first, second, and one or more additional image data sets.

3.   Method according to claim 2, further comprising:

    receiving an output probability map for each time instance after the first time instance in the time ordered set; and

determining changes in the object or class of objects in the geographical region, based on each of the received output probability maps.

4. Method according to any of the preceding claims, wherein the neural network is a deep recurrent neural network comprising at least two layers and at least one of the layers comprises a convolutional long short-term memory, ConvLSTM, cell, the method further comprising the step of initialising the neural network.

5. Method according to any of the preceding claims, further comprising pre-processing the image data sets and/or the object probability maps, the pre-processing comprising one or more of: rotating, scaling, resampling, cropping, and padding.

6. Method according to any of the preceding claims, further comprising:

receiving non-image data associated with the object or class of objects;
converting the non-image data to pixel data; and
concatenating the one or more of the object probability maps with the pixel data; and wherein providing an object probability map to an input of a neural network comprises providing an object probability map concatenated with the pixel data to the input of the neural network.

7. Method according to any of the preceding claims, further comprising:

receiving non-image data associated with the object or class of objects;
converting the non-image data to pixel data; and
concatenating the one or more output probability maps with the pixel data; and wherein determining changes in the object or class of objects in the geographical region comprises determining changes in the object or class of objects in the geographical region based on a convolution of the output probability map and the pixel data.

8. A computer system adapted for determining a change in an object or class of objects in image data, preferably remote sensing data, comprising: a computer readable storage medium having computer readable program code embodied therewith, the program code including at least one trained 3D deep neural network, and at least one processor, preferably a microprocessor, coupled to the computer readable storage medium, wherein responsive to executing the computer readable program code, the at least one processor is configured to perform executable operations comprising:

receiving a first image data set of a geographical region associated with a first time instance and receiving a second image data set of the geographical region associated with a second time instance;
determining an auxiliary probability map on the basis of the first image data set, a pixel in the auxiliary probability map having a pixel value, the pixel value representing a probability that the pixel is associated with an auxiliary object or an auxiliary class of objects, the object forming a part of the auxiliary object or the auxiliary object covering the object in the image data;
determining a first object probability map on the basis of the first image data set and the auxiliary probability map and determining a second object probability map on the basis of the second image data set, a pixel in the first and second object probability maps having a pixel value, the pixel value representing a probability that the pixel is associated with the object or class of objects;
providing the first object probability map and the second object probability map to an input of a neural network, preferably a recurrent neural network, the neural network being trained to determine a probability of a change in the object or class of objects, based on the pixel values in the first object probability map and in the second object probability map;
receiving an output probability map from an output of the neural network, a pixel in the output probability map having a pixel value, the pixel value representing a probability of a change in the object or class of objects; and
determining a change in the object or class of objects in the geographical region, based on the output probability map.

9. Computer system according to claim 8, wherein the neural network is a recurrent neural network, preferably a deep recurrent neural network comprising at least two layers and at least one of the layers comprising a convolutional long short-term memory, ConvLSTM, cell, and wherein the executable operations further comprise:

receiving one or more additional image data sets of the geographical region, each additional image data set being associated with an additional time instance;
for each of the one or more additional image data sets, determining an additional object probability map on the basis of the additional image data set, a pixel in the additional object probability map having a pixel value, the pixel value representing a probability that the pixel is associated with the object or class of objects; and

providing the one or more additional object probability maps to an input of the neural network, wherein the first object probability map, the second object probability map, and the one or more additional object probability maps are provided in an order based on a time ordering of the time instances associated with the first, second, and one or more additional image data sets.

10. Computer system according to claim 8, wherein the executable operations further comprise:

receiving an output probability map for each time instance after the first time instance in the time ordered set; and

determining changes in the object or class of objects in the geographical region, based on each of the received output probability maps.

11. Computer system according to any of claims 8-10 wherein the executable operations further comprise:

receiving non-image data associated with the object or class of objects;

converting the non-image data to pixel data; and concatenating the one or more of the object probability maps with the pixel data; and wherein providing an object probability map to an input of a neural network comprises providing an object probability map concatenated with the pixel data to the input of the neural network.

12. Computer system according to any of claims 8-11 wherein the executable operations further comprise:

receiving non-image data associated with the object or class of objects;

converting the non-image data to pixel data; and concatenating the one or more output probability maps with the pixel data; and wherein determining changes in the object or class of objects in the geographical region comprises determining changes in the object or class of objects in the geographical region based on a convolution of the output probability map and the pixel data.

13. Computer program product comprising software code portions configured for, when run in the memory of a computer, executing the method steps according to any of the claims 1-7.

**Patentansprüche**

1. Computerimplementiertes Verfahren zur Bestimmung einer Änderung in einem Objekt oder einer Objektklasse in Bilddaten, wobei Daten vorzugsweise fernabgetastet werden, das aufweist:

Empfangen eines ersten Bilddatensatzes einer geographischen Region, dem eine erste Zeitinstanz zugeordnet ist, und Empfangen eines zweiten Bilddatensatzes der geographischen Region, dem eine zweite Zeitinstanz zugeordnet ist; Bestimmen einer Hilfswahrscheinlichkeitskarte auf der Basis des ersten Bilddatensatzes, wobei ein Bildpunkt in der Hilfswahrscheinlichkeitskarte einen Bildpunktwert hat, wobei der Bildpunktwert eine Wahrscheinlichkeit darstellt, dass der Bildpunkt einem Hilfsobjekt oder einer Hilfsobjektklasse zugeordnet ist, wobei das Objekt einen Teil des Hilfsobjekts oder des Hilfsobjekts bildet oder das Hilfsobjekt das Objekt in den Bilddaten abdeckt;

Bestimmen einer ersten Objektwahrscheinlichkeitskarte auf der Basis des ersten Bilddatensatzes und der Hilfswahrscheinlichkeitskarte und Bestimmen einer zweiten Objektwahrscheinlichkeitskarte auf der Basis des zweiten Bilddatensatzes, wobei ein Bildpunkt in den ersten und zweiten Objektwahrscheinlichkeitskarten einen Bildpunktwert hat, wobei der Bildpunktwert eine Wahrscheinlichkeit darstellt, dass der Bildpunkt dem Objekt oder der Objektklasse zugeordnet ist;

Bereitstellen der ersten Objektwahrscheinlichkeitskarte und der zweiten Objektwahrscheinlichkeitskarte an einen Eingang eines neuronalen Netzwerks, vorzugsweise eines rekurrenten neuronalen Netzwerks, wobei das neuronale Netzwerk trainiert ist, um basierend auf den Bildpunktwerten in der ersten Objektwahrscheinlichkeitskarte und in der zweiten Objektwahrscheinlichkeitskarte eine Wahrscheinlichkeit für eine Änderung in dem Objekt oder der Objektklasse zu bestimmen;

Empfangen einer Ausgangswahrscheinlichkeitskarte von einem Ausgang des neuronalen Netzwerks, wobei ein Bildpunkt in der Ausgangswahrscheinlichkeitskarte einen Bildpunktwert hat, wobei der Bildpunktwert eine Wahrscheinlichkeit für eine Änderung in dem Objekt oder der Objektklasse darstellt, und Bestimmen einer Änderung in dem Objekt oder der Objektklasse in der geographischen Region basierend auf der Ausgangswahrscheinlichkeitskarte.

2. Verfahren nach Anspruch 1, wobei das neuronale Netzwerk ein rekurrentes neuronales Netzwerk ist, wobei das Verfahren ferner aufweist:

Empfangen eines oder mehrerer zusätzlicher Bilddatensätze der geographischen Region, wobei jedem zusätzlichen Bilddatensatz eine zusätzliche Zeitinstanz zugeordnet ist;

für jeden des einen oder der mehreren zusätzlichen Bilddatensätze Bestimmen einer zusätzlichen Objektwahrscheinlichkeitskarte auf der Basis des zusätzlichen Bilddatensatzes, wobei ein Bildpunkt in der zusätzlichen Objektwahrscheinlichkeitskarte einen Bildpunktwert hat, wobei der Bildpunktwert eine Wahrscheinlichkeit dafür darstellt, dass der Bildpunkt dem Objekt oder der Objektklasse zugeordnet ist; und Bereitstellen einer oder mehrerer zusätzlicher Objektwahrscheinlichkeitskarten an einen Eingang des neuronalen Netzwerks, wobei die erste Objektwahrscheinlichkeitskarte, die zweite Objektwahrscheinlichkeitskarte und die eine oder mehreren zusätzlichen Objektwahrscheinlichkeitskarten in einer Reihenfolge bereitgestellt werden, die auf einer Zeitreihenfolge der Zeitinstanzen, die den ersten, zweiten und dem einen oder mehreren zusätzlichen Bilddatensätzen zugeordnet sind, basiert.

3. Verfahren nach Anspruch 2, das ferner aufweist:

Empfangen einer Ausgangswahrscheinlichkeitskarte für jede Zeitinstanz nach der ersten Zeitinstanz in dem zeitlich geordneten Satz; und Bestimmen von Änderungen in dem Objekt oder der Objektklasse in der geographischen Region basierend auf jeder der empfangenen Ausgangswahrscheinlichkeitskarten.

4. Verfahren nach einem der vorhergehenden Ansprüche, wobei das neuronale Netzwerk ein tiefes rekurrentes neuronales Netzwerk ist, das wenigstens zwei Schichten aufweist, wobei wenigstens eine der Schichten eine Kurzzeitspeicherzelle mit langer Faltung, ConvLSTM-Zelle, aufweist, wobei das Verfahren ferner den Schritt des Initialisierens des neuronalen Netzwerks aufweist.

5. Verfahren nach einem der vorhergehenden Ansprüche, das ferner das Vorverarbeiten der Bilddatensätze und/oder der Objektwahrscheinlichkeitskarten aufweist, wobei das Vorverarbeiten eines oder mehrere der folgenden aufweist: Drehen, Skalieren, Wiederabtasten, Beschneiden und Auffüllen.

6. Verfahren nach einem der vorhergehenden Ansprüche, das ferner aufweist:

Empfangen von Nicht-Bilddaten, die dem Objekt oder der Objektklasse zugeordnet sind; Umwandeln der Nicht-Bilddaten in Bildpunktdaten; und Verketten der einen oder mehreren der Objektwahrscheinlichkeitskarten mit den Bildpunktda-

ten; und wobei das Bereitstellen einer Objektwahrscheinlichkeitskarte an einen Eingang eines neuronalen Netzwerks das Bereitstellen einer mit den Bildpunktdaten verketteten Objektwahrscheinlichkeitskarte an den Eingang des neuronalen Netzwerks aufweist.

7. Verfahren nach einem der vorhergehenden Ansprüche, das ferner aufweist:

Empfangen von Nicht-Bilddaten, die dem Objekt oder der Objektklasse zugeordnet sind; Umwandeln der Nicht-Bilddaten in Bildpunktdaten; und Verketten der einen oder mehreren Objektwahrscheinlichkeitskarten mit den Bildpunktdaten; und wobei das Bestimmen von Änderungen in dem Objekt oder der Objektklasse in der geographischen Region das Bestimmen von Änderungen in dem Objekt oder der Objektklasse in der geographischen Region basierend auf einer Faltung der Ausgangswahrscheinlichkeitskarte und der Bildpunktdaten aufweist.

8. Computersystem, das geeignet ist, eine Änderung in einem Objekt oder einer Objektklasse in Bilddaten zu bestimmen, wobei Daten vorzugsweise femabgetastet werden, das aufweist: ein computerlesbares Speichermedium mit darauf verkörpertem computerlesbarem Programmcode, wobei der Programmcode wenigstens ein trainiertes tiefes neuronales 3D-Netzwerk und wenigstens einen Prozessor, vorzugsweise einen Mikroprozessor, der mit dem computerlesbaren Speichermedium gekoppelt ist, umfasst, wobei der wenigstens eine Prozessor konfiguriert ist, um ansprechend auf die Ausführung des computerlesbaren Programmcodes ausführbare Operationen durchzuführen, die aufweisen:

Empfangen eines ersten Bilddatensatzes einer geographischen Region, dem eine erste Zeitinstanz zugeordnet ist, und Empfangen eines zweiten Bilddatensatzes der geographischen Region, dem eine zweite Zeitinstanz zugeordnet ist; Bestimmen einer Hilfswahrscheinlichkeitskarte auf der Basis des ersten Bilddatensatzes, wobei ein Bildpunkt in der Hilfswahrscheinlichkeitskarte einen Bildpunktwert hat, wobei der Bildpunktwert eine Wahrscheinlichkeit darstellt, dass der Bildpunkt einem Hilfsobjekt oder einer Hilfsobjektklasse zugeordnet ist, wobei das Objekt einen Teil des Hilfsobjekts oder des Hilfsobjekts bildet, oder das Hilfsobjekt das Objekt in den Bilddaten abdeckt; Bestimmen einer ersten Objektwahrscheinlichkeitskarte auf der Basis des ersten Bilddatensatzes und der Hilfswahrscheinlichkeitskarte und Bestimmen einer zweiten Objektwahrscheinlichkeitskarte auf der Basis des zweiten Bilddatensatzes, wobei ein Bildpunkt in den ersten und zweiten Objektwahrscheinlichkeitskarten einen Bildpunktwert hat, wobei der Bildpunktwert eine Wahrscheinlichkeit darstellt, dass der Bildpunkt dem Objekt oder der Objektklasse zugeordnet ist;

Bereitstellen der ersten Objektwahrscheinlichkeitskarte und der zweiten Objektwahrscheinlichkeitskarte an einen Eingang eines neuronalen Netzwerks, vorzugsweise eines rekurrenten neuronalen Netzwerks, wobei das neuronale Netzwerk trainiert ist, um basierend auf den Bildpunktwerten in der ersten Objektwahrscheinlichkeitskarte und in der zweiten Objektwahrscheinlichkeitskarte eine Wahrscheinlichkeit für eine Änderung in dem Objekt oder der Objektklasse zu bestimmen;

Empfangen einer Ausgangswahrscheinlichkeitskarte von einem Ausgang des neuronalen Netzwerks, wobei ein Bildpunkt in der Ausgangswahrscheinlichkeitskarte einen Bildpunktwert hat, wobei der Bildpunktwert eine Wahrscheinlichkeit für eine Änderung in dem Objekt oder der Objektklasse darstellt, und Bestimmen einer Änderung in dem Objekt oder der Objektklasse in der geographischen Region basierend auf der Ausgangswahrscheinlichkeitskarte.

9. Computersystem nach Anspruch 8, wobei das neuronale Netzwerk ein rekurrentes neuronales Netzwerk, vorzugsweise ein tiefes rekurrentes neuronales Netzwerk ist, das wenigstens zwei Schichten aufweist, wobei wenigstens eine der Schichten eine Kurzzeitspeicherzelle mit langer Faltung, ConvLSTM-Zelle, aufweist, und wobei die ausführbaren Operationen ferner aufweisen:

Empfangen eines oder mehrerer zusätzlicher Bilddatensätze der geographischen Region, wobei jedem zusätzlichen Bilddatensatz eine zusätzliche Zeitinstanz zugeordnet ist;
für jeden des einen oder der mehreren zusätzlichen Bilddatensätze Bestimmen einer zusätzlichen Objektwahrscheinlichkeitskarte auf der Basis des zusätzlichen Bilddatensatzes, wobei ein Bildpunkt in der zusätzlichen Objektwahrscheinlichkeitskarte einen Bildpunktwert hat, wobei der Bildpunktwert eine Wahrscheinlichkeit hat, dass der Bildpunkt dem Objekt oder der Objektklasse zugeordnet ist, darstellt, und
Bereitstellen einer oder mehrerer zusätzlicher Objektwahrscheinlichkeitskarten an einen Eingang des neuronalen Netzwerks, wobei die erste Objektwahrscheinlichkeitskarte, die zweite Objektwahrscheinlichkeitskarte und die eine oder mehreren zusätzlichen Objektwahrscheinlichkeitskarten in einer Reihenfolge bereitgestellt werden, die auf einer Zeitreihenfolge der Zeitinstanzen, die den ersten, zweiten und dem einen oder mehreren zusätzlichen Bilddatensätzen zugeordnet sind, basiert.

10. Computersystem nach Anspruch 8, wobei die ausführbaren Operationen ferner aufweisen:

Empfangen einer Ausgangswahrscheinlichkeitskarte für jede Zeitinstanz nach der ersten Zeitinstanz in dem zeitlich geordneten Satz; und Bestimmen von Änderungen in dem Objekt oder der Objektklasse in der geographischen Region basierend auf jeder der empfangenen Ausgangswahrscheinlichkeitskarten.

11. Computersystem nach einem der Ansprüche 8 bis 10, wobei die ausführbaren Operationen ferner aufweisen:

Empfangen von Nicht-Bilddaten, die dem Objekt oder der Objektklasse zugeordnet sind;
Umwandeln der Nicht-Bilddaten in Bildpunktdaten; und
Verketten der einen oder mehreren der Objektwahrscheinlichkeitskarten mit den Bildpunktdaten; und wobei das Bereitstellen einer Objektwahrscheinlichkeitskarte an einen Eingang eines neuronalen Netzwerks das Bereitstellen einer mit den Bildpunktdaten verketteten Objektwahrscheinlichkeitskarte an den Eingang des neuronalen Netzwerks aufweist.

12. Computersystem nach einem der Ansprüche 8 bis 11, wobei die ausführbaren Operationen ferner aufweisen:

Empfangen von Nicht-Bilddaten, die dem Objekt oder der Objektklasse zugeordnet sind;
Umwandeln der Nicht-Bilddaten in Bildpunktdaten; und
Verketten der einen oder mehreren Objektwahrscheinlichkeitskarten mit den Bildpunktdaten; und
wobei das Bestimmen von Änderungen in dem Objekt oder der Objektklasse in der geographischen Region das Bestimmen von Änderungen in dem Objekt oder der Objektklasse in der geographischen Region basierend auf einer Faltung der Ausgangswahrscheinlichkeitskarte und der Bildpunktdaten aufweist.

13. Computerprogrammprodukt, das Softwarecodeabschnitte aufweist, die konfiguriert sind, um, wenn sie im Speicher eines Computers laufen gelassen werden, die Verfahrensschritte nach einem der Ansprüche 1 bis 7 auszuführen.

**Revendications**

1. Procédé mis en œuvre par ordinateur pour déterminer un changement dans un objet ou une classe d'objets dans des données d'image, de préférence des données de télédétection, comprenant :

la réception d'un premier jeu de données d'image d'une région géographique associé à une première instance temporelle et la réception d'un deuxième jeu de données d'image de la région géographique associé à une deuxième instance temporelle ;
la détermination d'une carte de probabilité auxiliaire sur la base du premier jeu de données d'image, un pixel dans la carte de probabilité auxiliaire ayant une valeur de pixel, la valeur de pixel représentant une probabilité que le pixel soit associé à un objet auxiliaire ou à une classe d'objets auxiliaire, l'objet formant une partie de l'objet auxiliaire ou l'objet auxiliaire couvrant l'objet dans les données d'image ;
la détermination d'une première carte de probabilité d'objet sur la base du premier jeu de données d'image et de la carte de probabilité auxiliaire et la détermination d'une deuxième carte de probabilité d'objet sur la base du deuxième jeu de données d'image, un pixel dans les première et deuxième cartes de probabilité d'objet ayant une valeur de pixel, la valeur de pixel représentant une probabilité que le pixel soit associé à l'objet ou à la classe d'objets ;
la fourniture de la première carte de probabilité d'objet et de la deuxième carte de probabilité d'objet à une entrée d'un réseau neuronal, de préférence un réseau neuronal récurrent, le réseau neuronal étant entraîné pour déterminer une probabilité d'un changement dans l'objet ou la classe d'objets, sur la base des valeurs de pixel dans la première carte de probabilité d'objet et dans la deuxième carte de probabilité d'objet ;
la réception d'une carte de probabilité de sortie à partir d'une sortie du réseau neuronal, un pixel dans la carte de probabilité de sortie ayant une valeur de pixel, la valeur de pixel représentant une probabilité d'un changement dans l'objet ou la classe d'objets ; et
la détermination d'un changement dans l'objet ou la classe d'objets dans la région géographique, sur la base de la carte de probabilité de sortie.

2. Procédé selon la revendication 1, dans lequel le réseau neuronal est un réseau neuronal récurrent, le procédé comprenant en outre :

la réception d'un ou plusieurs jeux de données d'image supplémentaires de la région géographique, chaque jeu de données d'image supplémentaire étant associé à une instance temporelle supplémentaire ;
pour chacun des un ou plusieurs jeux de données d'image supplémentaires, la détermination d'une carte de probabilité d'objet supplémentaire sur la base du jeu de données d'image supplémentaire, un pixel dans la carte de probabilité d'objet supplémentaire ayant une valeur de pixel, la valeur de pixel représentant une probabilité que le pixel soit associé à l'objet ou à la classe d'objets ; et
la fourniture des une ou plusieurs cartes de probabilité d'objet supplémentaires à une entrée du réseau neuronal, dans lequel la première carte de probabilité d'objet, la deuxième carte de probabilité d'objet, et les une ou plusieurs cartes de probabilité d'objet supplémentaires sont fournies dans un ordre basé sur un ordre dans le temps des instances temporelles associées aux premier, deuxième, et un ou plusieurs jeux de données d'image supplémentaires.

3. Procédé selon la revendication 2, comprenant en outre :

la réception d'une carte de probabilité de sortie pour chaque instance temporelle après la première instance temporelle dans le jeu ordonné dans le temps ; et
la détermination de changements dans l'objet ou la classe d'objets dans la région géographique, sur la base de chacune des cartes de probabilité de sortie reçues.

4. Procédé selon l'une quelconque des revendications précédentes, dans lequel le réseau neuronal est un réseau neuronal récurrent profond comprenant au moins deux couches et au moins une des couches comprend une cellule de mémoire à long et court terme convolutive, ConvLSTM, le procédé comprenant en outre l'étape consistant à initialiser le réseau neuronal.

5. Procédé selon l'une quelconque des revendications précédentes, comprenant en outre le prétraitement des jeux de données d'image et/ou des cartes de probabilité d'objet, le prétraitement comprenant un ou plusieurs parmi : une rotation, une mise à l'échelle, un rééchantillonnage, un détourage, et un remplissage.

6. Procédé selon l'une quelconque des revendications précédentes, comprenant en outre :

la réception de données qui ne sont pas des données d'image associées à l'objet ou à la classe d'objets ;

la conversion des données qui ne sont pas des données d'image en données de pixel ; et

la concaténation des une ou plusieurs des cartes de probabilité d'objet avec les données de pixel ; et dans lequel la fourniture d'une carte de probabilité d'objet à une entrée d'un réseau neuronal comprend la fourniture d'une carte de probabilité d'objet concaténée avec les données de pixel à l'entrée du réseau neuronal.

**7.** Procédé selon l'une quelconque des revendications précédentes, comprenant en outre :

la réception de données qui ne sont pas des données d'image associées à l'objet ou à la classe d'objets ;

la conversion des données qui ne sont pas des données d'image en données de pixel ; et

la concaténation des une ou plusieurs cartes de probabilité de sortie avec les données de pixel ; et dans lequel la détermination de changements dans l'objet ou la classe d'objets dans la région géographique comprend la détermination de changements dans l'objet ou la classe d'objets dans la région géographique sur la base d'une convolution de la carte de probabilité de sortie et des données de pixel.

**8.** Système informatique adapté pour déterminer un changement dans un objet ou une classe d'objets dans des données d'image, de préférence des données de télédétection, comprenant :

un support de stockage lisible par ordinateur ayant un code de programme lisible par ordinateur incorporé dans celui-ci, le code de programme comportant au moins un réseau neuronal profond 3D entraîné, et au moins un processeur, de préférence un microprocesseur, couplé au support de stockage lisible par ordinateur, dans lequel en réponse à l'exécution du code de programme lisible par ordinateur, l'au moins un processeur est configuré pour réaliser des opérations exécutables comprenant :

la réception d'un premier jeu de données d'image d'une région géographique associé à une première instance temporelle et la réception d'un deuxième jeu de données d'image de la région géographique associé à une deuxième instance temporelle ;

la détermination d'une carte de probabilité auxiliaire sur la base du premier jeu de données d'image, un pixel dans la carte de probabilité auxiliaire ayant une valeur de pixel, la valeur de pixel représentant une probabilité que le pixel soit associé à un objet auxiliaire ou à une classe d'objets auxiliaire, l'objet formant une partie de l'objet auxiliaire ou l'objet auxiliaire couvrant l'objet dans les données d'image ;

la détermination d'une première carte de probabilité d'objet sur la base du premier jeu de données d'image et de la carte de probabilité auxiliaire et la détermination d'une deuxième carte de probabilité d'objet sur la base du deuxième jeu de données d'image, un pixel dans les première et deuxième cartes de probabilité d'objet ayant une valeur de pixel, la valeur de pixel représentant une probabilité que le pixel soit associé à l'objet ou à la classe d'objets ;

la fourniture de la première carte de probabilité d'objet et de la deuxième carte de probabilité d'objet à une entrée d'un réseau neuronal, de préférence un réseau neuronal récurrent, le réseau neuronal étant entraîné pour déterminer une probabilité d'un changement dans l'objet ou la classe d'objets, sur la base des valeurs de pixel dans la première carte de probabilité d'objet et dans la deuxième carte de probabilité d'objet ;

la réception d'une carte de probabilité de sortie à partir d'une sortie du réseau neuronal, un pixel dans la carte de probabilité de sortie ayant une valeur de pixel,

la valeur de pixel représentant une probabilité d'un changement dans l'objet ou la classe d'objets ; et

la détermination d'un changement dans l'objet ou la classe d'objets dans la région géographique, sur la base de la carte de probabilité de sortie.

**9.** Système informatique selon la revendication 8, dans lequel le réseau neuronal est un réseau neuronal récurrent, de préférence un réseau neuronal récurrent profond comprenant au moins deux couches et au moins une des couches comprenant une cellule de mémoire à long et court terme convolutive, ConvLSTM, et dans lequel les opérations exécutables comprennent en outre :

la réception d'un ou plusieurs jeux de données d'image supplémentaires de la région géographique, chaque jeu de données d'image supplémentaire étant associé à une instance temporelle supplémentaire ;

pour chacun des un ou plusieurs jeux de données d'image supplémentaires, la détermination d'une carte de probabilité d'objet supplémentaire sur la base du jeu de données d'image supplémentaire, un pixel dans la carte de probabilité d'objet supplémentaire ayant une valeur de pixel, la valeur de pixel représentant une probabilité que le pixel soit associé à l'objet ou à la classe d'objets ; et

la fourniture des une ou plusieurs cartes de probabilité d'objet supplémentaires à une entrée du réseau neuronal, dans lequel la première carte de probabilité d'objet, la deuxième carte de probabilité d'objet, et les une ou plusieurs cartes de probabilité d'objet supplémentaires sont fournies dans un ordre basé sur un ordre dans le temps des instances temporelles associées aux premier, deuxième, et un ou plusieurs jeux de données d'image supplémentaires.

10. Système informatique selon la revendication 8, dans lequel les opérations exécutables comprennent en outre :

la réception d'une carte de probabilité de sortie pour chaque instance temporelle après la première instance temporelle dans le jeu ordonné dans le temps ; et

la détermination de changements dans l'objet ou la classe d'objets dans la région géographique, sur la base de chacune des cartes de probabilité de sortie reçues.

11. Système informatique selon l'une quelconque des revendications 8 à 10 dans lequel les opérations exécutables comprennent en outre :

la réception de données qui ne sont pas des données d'image associées à l'objet ou à la classe d'objets ;

la conversion des données qui ne sont pas des données d'image en données de pixel ; et

la concaténation des une ou plusieurs des cartes de probabilité d'objet avec les données de pixel ; et dans lequel la fourniture d'une carte de probabilité d'objet à une entrée d'un réseau neuronal comprend la fourniture d'une carte de probabilité d'objet concaténée avec les données de pixel à l'entrée du réseau neuronal.

12. Système informatique selon l'une quelconque des revendications 8 à 11 dans lequel les opérations exécutables comprennent en outre :

la réception de données qui ne sont pas des données d'image associées à l'objet ou à la classe d'objets ;

la conversion des données qui ne sont pas des données d'image en données de pixel ; et

la concaténation des une ou plusieurs cartes de probabilité de sortie avec les données de pixel ; et dans lequel la détermination de changements dans l'objet ou la classe d'objets dans la région géographique comprend la détermination de changements dans l'objet ou la classe d'objets dans la région géographique sur la base d'une convolution de la carte de probabilité de sortie et des données de pixel.

13. Produit programme d'ordinateur comprenant des portions de code de logiciel configurées pour, lorsqu'elles sont exploitées dans la mémoire d'un ordinateur, exécuter les étapes de procédé selon l'une quelconque des revendications 1 à 7.

FIG. 1

$t = t_0$ · · · · · · · · · · · · · · · · · · · · · · · · · · · · $t = t_1$

```
┌─────────────────────────┐        ┌─────────────────────────┐
│  ┌───────────────────┐  │        │  ┌───────────────────┐  │
│  │   image data      │  │        │  │   image data      │  │
│  │ 202               │  │        │  │ 212               │  │
│  └───────────────────┘  │        │  └───────────────────┘  │
│            │            │        │            │            │
│            ▼            │        │            ▼            │
│  ┌───────────────────┐  │        │  ┌───────────────────┐  │
│  │ object detector(s)│  │        │  │ object detector(s)│  │
│  │ 204               │  │        │  │ 214               │  │
│  └───────────────────┘  │        │  └───────────────────┘  │
│            │            │        │            │            │
│            ▼            │        │            ▼            │
│  ┌───────────────────┐  │        │  ┌───────────────────┐  │
│  │     object        │  │        │  │     object        │  │
│  │206 probability map│  │        │  │216 probability map│  │
│  └───────────────────┘  │        │  └───────────────────┘  │
│            │            │        │            │            │
│            ▼            │        │            ▼            │
│  ┌───────────────────┐  │        │  ┌───────────────────┐  │
│  │ resampled object  │  │        │  │ resampled object  │  │
│  │208 probability map│  │        │  │218 probability map│  │
│  └───────────────────┘  │        │  └───────────────────┘  │
└─────────────────────────┘        └─────────────────────────┘
```

(Recurrent) Neural Network

220

change probability map

222

changed objects

224

**FIG. 2**

EP 3 997 616 B1

$314_0$

$t = t_0$
object probability map
$1 \times 512 \times 512$

$314_1$

$t = t_1$
object probability map
$1 \times 512 \times 512$

...

$314_n$

$t = t_n$
object probability map
$1 \times 512 \times 512$

$302$

$301_0$

$308_1$

$301_1$

$300$

$301_n$

$312$

$304_1$

initialisation data

1st ConvLSTM layer
$c_1 \times 512 \times 512$

1st ConvLSTM layer
$c_1 \times 512 \times 512$

...

1st ConvLSTM layer
$c_1 \times 512 \times 512$

$306_1$

$304_2$

2nd ConvLSTM layer
$c_2 \times 512 \times 512$

2nd ConvLSTM layer
$c_2 \times 512 \times 512$

...

2nd ConvLSTM layer
$c_2 \times 512 \times 512$

...

...

...

...

$306_m$

$m^{th}$ ConvLSTM layer
$c_m \times 512 \times 512$

$m^{th}$ ConvLSTM layer
$c_m \times 512 \times 512$

...

$m^{th}$ ConvLSTM layer
$c_m \times 512 \times 512$

$316_1$

$t = t_1$
change probability map
$1 \times 512 \times 512$

...

$316_n$

$t = t_n$
change probability map
$1 \times 512 \times 512$

**FIG. 3**

FIG. 4B

FIG. 4A

FIG. 5A

FIG. 5B

FIG. 6

FIG. 7

FIG. 8B

- 852 image data
- 854 object detector(s)
- 856 object probability map
- 858 resampled object probability map
- 870 (Recurrent) Neural Network
- 860 object information
- 862 pixelized object information
- 864 concat
- 866 convolution
- 872 change probability map

FIG. 8A

- 802 image data
- 804 object detector(s)
- 806 object probability map
- 808 resampled object probability map
- 820 (Recurrent) Neural network
- 810 object information
- 812 pixelized object information
- 814 concat
- 822 change probability map

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. SONG et al.** Change detection in hyperspectral images using recurrent 3D fully convolutional networks. *Remote Sensing,* 2018, vol. 10 (11
- **NEMOTO KEISUKE et al.** Building change detection via a combination of CNNs using only RGB aerial imageries. *PROCEEDINGS OF SPIE,* 2017
- Generating sequences with recurrent neural networks. *arXiv:1308.0850v5,* 05 June 2014
- **A. GRAVES.** Generating sequences with recurrent neural networks. *arXiv:1308.0850v5,* 05 June 2014

- **XINGJIAN SHI et al.** Convolutional LSTM network: a machine learning approach for precipitation nowcasting. *Adv. Neural Inf. Process. Syst.,* 2015, vol. 1, 802-810
- **WEIJA LI et al.** Semantic segmentation-based building footprint extraction using very high-resolution satellite image and multi-source GIS-data. *Remote sensing,* 2019, vol. 11 (4